# EUROPÄISCHE PATENTSCHRIFT

(11) **EP 4 197 051 B1**
(45) Veröffentlichungstag und Bekanntmachung des Hinweises auf die Patenterteilung: **23.04.2025**
(21) Anmeldenummer: 21763284.3
(22) Anmeldetag: 11.08.2021
(51) Int. Cl.: H01M 10/052, H01M 10/0583, H01M 10/0587, H01M 50/107, H01M 50/152, H01M 50/169, H01M 50/296, H01M 50/545, H01M 50/552

(54) **ENERGIESPEICHERZELLE MIT HOHER SPEZIFISCHER ENERGIEDICHTE**
LITHIUM ION CELL WITH HIGH SPECIFIC ENERGY DENSITY
ÉLÉMENT LITHIUM-ION À HAUTE DENSITÉ ÉNERGÉTIQUE SPÉCIFIQUE

(30) Priorität: 11.08.2020 EP 20190528
(43) Veröffentlichungstag der Anmeldung: 21.06.2023
(73) Patentinhaber: VARTA Microbattery GmbH, 73479 Ellwangen Jagst (DE)
(72) Erfinder: PYTLIK, Edward, 73479 Ellwangen (DE); ENSLING, David, 73479 Ellwangen (DE)
(74) Vertreter: Ostertag & Partner Patentanwälte mbB
(86) Internationale Anmeldenummer: PCT/EP2021/072428
(87) Internationale Veröffentlichungsnummer: WO 2022/034156

(56) Entgegenhaltungen:
- WO-A1-2005/109551
- WO-A1-2015/015274

## Beschreibung

Die nachstehend beschriebene Erfindung betrifft eine Energiespeicherzelle, die einen Elektroden-Separator-Verbund umfasst.

### ANWENDUNGSGEBIET UND STAND DER TECHNIK

Elektrochemische Zellen sind dazu in der Lage, gespeicherte chemische Energie durch eine Redoxreaktion in elektrische Energie umzuwandeln. Sie umfassen in der Regel eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden Ionenstrom innerhalb der Zelle. Dieser Ionenstrom durchquert den Separator und wird durch einen Ionen leitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und damit die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür oftmals Partikel auf Kohlenstoffbasis, wie beispielsweise graphitischer Kohlenstoff, eingesetzt. Es können auch andere, nicht-graphitische Kohlenstoffmaterialien verwendet werden, die zur Interkalation von Lithium geeignet sind. Darüber hinaus können auch metallische und halbmetallische Materialien, die mit Lithium legierbar sind, zum Einsatz kommen. So sind beispielsweise die Elemente Zinn, Aluminium, Antimon und Silizium in der Lage, mit Lithium intermetallische Phasen zu bilden. Als Aktivmaterialien für die positive Elektrode können beispielsweise Lithiumcobaltoxid (Li-CoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektor für die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen in der Regel Lösungen von Lithiumsalzen wie Lithiumhexafluorophosphat (LiPF₆) in organischen Lösungsmitteln (z. B. Ether und Ester der Kohlensäure).

Die Kompositelektroden werden bei der Herstellung einer Lithium-Ionen-Zelle mit einem oder mehreren Separatoren zu einem Verbundkörper kombiniert. Hierbei werden die Elektroden und Separatoren meist unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Verbundkörper in Form eines Wickels gebildet oder zu einem Wickel verarbeitet. In der Regel umfasst er die Sequenz positive Elektrode / Separator / negative Elektrode. Häufig werden Verbundkörper als sogenannte Bizellen mit den möglichen Sequenzen negative Elektrode / Separator / positive Elektrode / Separator / negative Elektrode oder positive Elektrode / Separator / negative Elektrode / Separator / positive Elektrode hergestellt.

Für Anwendungen im Automobilbereich, für E-Bikes oder auch für andere Anwendungen mit hohem Energiebedarf wie z.B. in Werkzeugen werden Lithium-Ionen-Zellen mit möglichst hoher Energiedichte benötigt die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 x 70 (Durchmesser mal Höhe in mm) Zellen dieser Art umfassen stets einen Verbundkörper in Form eines Wickels. Moderne Lithium-Ionen-Zellen dieses Formfaktors können bereits eine Energiedichte von bis zu 270 Wh/kg erreichen. Diese Energiedichte wird allerdings nur als Zwischenschritt angesehen. Vom Markt werden bereits Zellen mit noch höheren Energiedichten gefordert.

Bei der Entwicklung verbesserter elektrochemischer Zellen sind allerdings noch andere Faktoren zu beachten als nur die Energiedichte. Außerordentlich wichtige Parameter sind auch der Innenwiderstand der Zellen, der möglichst niedrig gehalten werden sollte, um Leistungsverluste beim Laden und Entladen zu verringern, sowie die thermische Anbindung der Elektroden, die für eine Temperaturregulierung der Zelle essentiell sein kann. Auch diese Parameter sind für zylindrische Rundzellen, die einen Verbundkörper in Form eines Wickels enthalten, sehr wichtig. Beim Schnellladen von Zellen können aufgrund von Leistungsverlusten Wärmestaus in den Zellen auftreten, die zu massiven thermomechanischen Belastungen und in der Folge zu Verformungen und Beschädigungen der Zellstruktur führen können. Das Risiko besteht verstärkt dann, wenn die elektrische Anbindung der Stromkollektoren über separate elektrische, an die Stromkollektoren geschweißte Ableiterfahnen erfolgt, die axial aus gewickelten Verbundkörpern austreten, da bei starken Belastungen beim Laden oder Entladen eine Erwärmung lokal an diesen Ableiterfahnen auftreten kann.

In der WO 2017/215900 A1 sind Zellen beschrieben, bei denen der Elektroden-Separator-Verbund sowie dessen Elektroden bandförmig ausgebildet sind und in Form eines Wickels vorliegen. Die Elektroden weisen jeweils mit Elektrodenmaterial beladene Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Seite und Längsränder der Stromkollektoren der negativen Elektroden an einer weiteren Seite aus dem Wickel austreten. Zur elektrischen Kontaktierung der Stromkollektoren weist die Zelle mindestens ein Kontaktelement auf, das auf einem der Längsränder derart aufliegt, dass sich eine linienartige Kontaktzone ergibt. Das Kontaktelement ist mit dem Längsrand entlang der linienartigen Kontaktzone durch Verschweißung verbunden. Dadurch ist es möglich, den Stromkollektor und damit auch die dazugehörige Elektrode über seine / ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen werden.

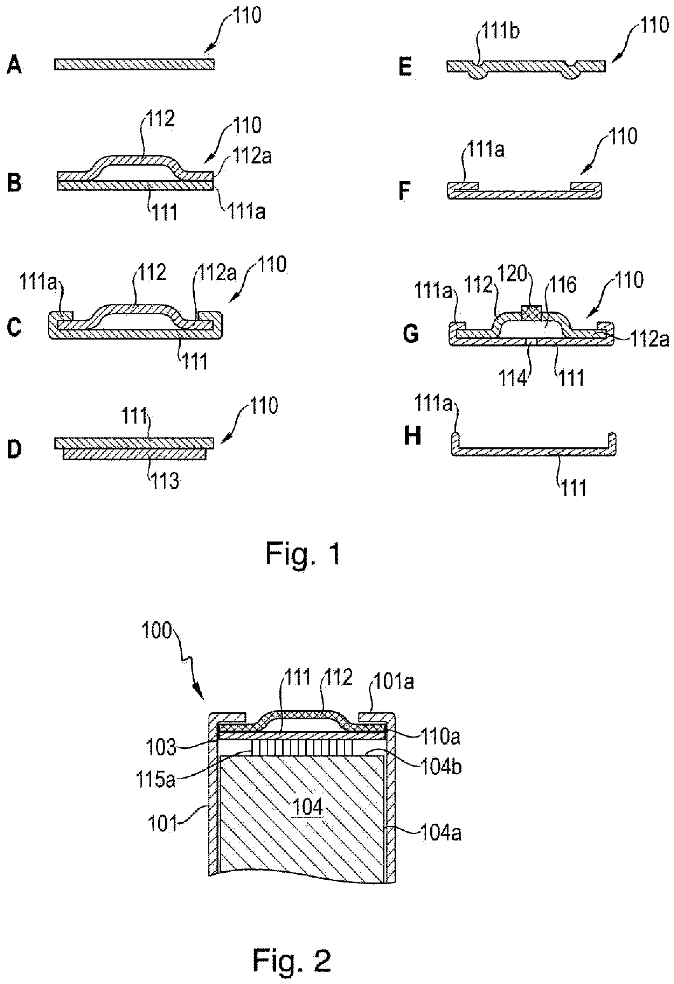

Aus der US 6432574 B1 sind zylindrische Rundzellen bekannt, bei denen gleichfalls als Wickel ausgebildete Elektroden-Separator-Verbünde über stirnseitig aufgeschweißte Kontaktbleche elektrisch kontaktiert werden. In Fig. 2A ist ein typisches Gehäuse zur Aufnahme eines solchen Elektroden-Separator-Verbunds dargestellt. Es umfasst ein becherförmiges Gehäuseteil in dem ein gewickelter Elektroden-Separator-Verbund axial ausgerichtet ist. Verschlossen ist das Gehäuse mittels eines mehrteiligen Deckels, auf dessen Rand eine ringförmige Dichtung aufgezogen ist. Zur Abdichtung des Gehäuses wurde der endständige Rand des Bechers radial nach innen über den Rand des Deckels sowie die darauf aufgezogene Dichtung umgebogen. Zur Unterstützung dieses Prozesses ist die umlaufende tiefe Nut unmittelbar unterhalb des Deckels erforderlich. In diese greift bei der Abdichtung ein Werkzeug ein, damit beim Umbiegen des endständigen Rands von oben und unten ein axialer Druck auf den Deckelrand sowie die Dichtung ausgeübt werden kann. Im Ergebnis wird hierbei die Dichtung zwischen der Nut und der Unterseite des Deckelrands sowie dem umgebogenen Rand des Bechers und der Oberseite des Deckelrands komprimiert, was zu einer effizienten Abdichtung führt. Die benötigte Nut ist allerdings nachteilhaft. Zum einen muss sie nach dem Einschieben des Elektroden-Separator-Verbundes in einem separaten Schritt in das Gehäuse eingebracht werden. Zum anderen bedingt die Nut ein Totvolumen, das mittels eines Stromleiters überwunden werden muss, um einen elektrischen Kontakt zum Deckel herzustellen. Im Falle der in Fig. 2A dargestellten Zelle wird hierzu ein überlanges Kontaktblech auf die obere Stirnseite aufgeschweißt, umgebogen und an die Innenseite des Deckels geschweißt.

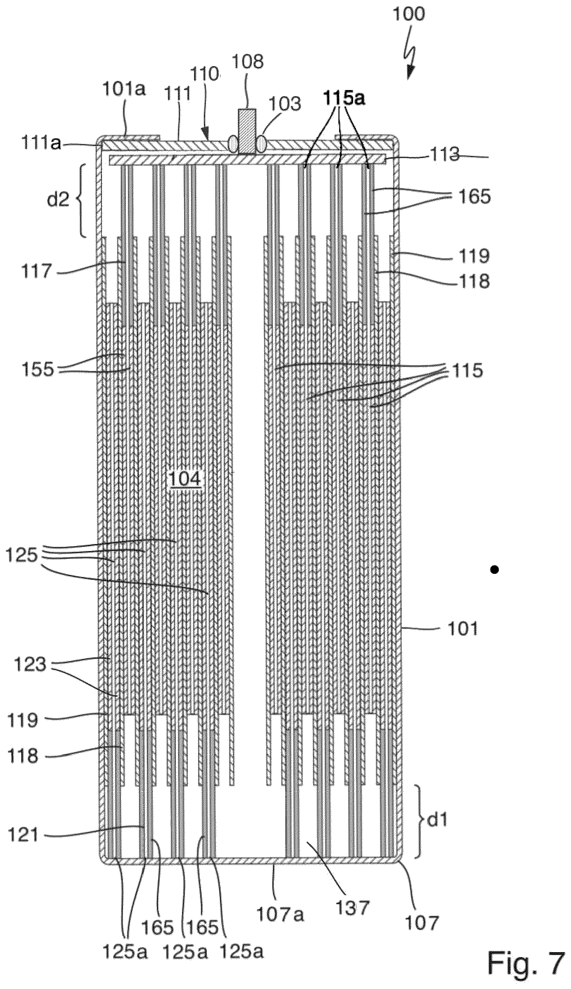

Aus der WO 2005/109551 A1 ist eine elektrochemische Zelle bekannt, bei der zwischen den Längsrändern von Stromkollektoren sogenannte "guidewires" angeordnet sind. Gemeinsam mit den Längsrändern der Stromkollektoren bilden die "guidewires" sogenannte "endcaps", die eine Anbindung bspw. an den Boden eines Gehäusebechers der elektrochemischen Zelle ermöglichen. Zur Stabilisierung der "endcaps" können die Längsränder und die "guidewires" miteinander verschweißt werden. Mit dem Boden können die "endcaps" - und damit auch die Ränder der Stromkollektoren - durch eine Verschweißung verbunden werden. Verschlossen wird das in Figur 7 dargestellte Gehäuse mittels eines Gehäusedeckels, der eine zentrale Poldurchführung umfasst.

Aus der WO 2015/015274 A1 ist eine prismatische Zelle mit einem prismatischen Wickel bekannt. Innerhalb des Wickels sind die gewickelten Elektroden versetzt zueinander angeordnet, so dass an Stirnseiten des Wickels unbeschichtete Randstreifen von Stromkollektoren austreten, die elektrisch kontaktiert werden können.

### AUFGABE UND LÖSUNG

Der vorliegenden Erfindung lag die Aufgabe zugrunde, Energiespeicherzellen bereitzustellen, die sich durch eine gegenüber dem Stand der Technik verbesserte Energiedichte sowie eine homogene Stromverteilung möglichst über die gesamte Fläche und Länge ihrer Elektroden auszeichnen und die gleichzeitig hervorragende Charakteristiken bezüglich ihres Innenwiderstands und ihrer passiven Entwärmungsfähigkeiten besitzen. Weiterhin sollen sich die Zellen auch durch eine verbesserte Herstellbarkeit und Sicherheit auszeichnen.

Diese Aufgabe wird durch die nachfolgend beschriebene Energiespeicherzelle, insbesondere die bevorzugte Ausführungsform der nachstehend beschriebenen Energiespeicherzelle mit den Merkmalen des Anspruchs 1, sowie die nachstehend beschriebenen Verfahren, insbesondere das Verfahren mit den Merkmalen des Anspruchs 10, gelöst. Bevorzugte Ausgestaltungen der Zelle und des Verfahrens ergeben sich auch aus den abhängigen Ansprüchen.

Die erfindungsgemäße Energiespeicherzelle weist stets die unmittelbar folgenden Merkmale a. bis j. auf:
a. die Zelle umfasst einen Elektroden-Separator-Verbund mit der Sequenz Anode / Separator / Kathode,
b. der Elektroden-Separator-Verbund liegt in Form eines zylindrischen Wickels mit zwei endständigen Stirnseiten und einem dazwischen liegenden Wickelmantel vor,
c. die Zelle umfasst ein Gehäuse, das ein metallisches, rohrförmig ausgebildetes Gehäuseteil mit einer endständigen kreisförmigen Öffnung umfasst,
d. in dem Gehäuse ist der als Wickel ausgebildete Elektroden-Separator-Verbund axial ausgerichtet, so dass der Wickelmantel an der Innenseite des rohrförmig ausgebildeten Gehäuseteils anliegt,
e. die Anode ist bandförmig ausgebildet und umfasst einen bandförmigen Anodenstromkollektor mit einem ersten Längsrand und einem zweiten Längsrand und zwei Endstücken,
f. der Anodenstromkollektor umfasst einen bandförmigen Hauptbereich, der mit einer Schicht aus negativem Elektrodenmaterial beladen ist, sowie einen freien Randstreifen, der sich entlang des ersten Längsrands erstreckt und der nicht mit dem Elektrodenmaterial beladen ist,
g. die Kathode ist bandförmig ausgebildet und umfasst einen bandförmigen Kathodenstromkollektor mit einem ersten Längsrand und einem zweiten Längsrand und zwei Endstücken,
h. der Kathodenstromkollektor umfasst einen bandförmigen Hauptbereich, der mit einer Schicht aus positivem Elektrodenmaterial beladen ist, sowie einen freien Randstreifen, der sich entlang des ersten Längsrands erstreckt und der nicht mit dem Elektrodenmaterial beladen ist,
i. die Anode und die Kathode sind innerhalb des Elektroden-Separator-Verbunds derart angeordnet, dass der erste Längsrand des Anodenstromkollektors aus einer der endständigen Stirnseiten und der erste Längsrand des Kathodenstromkollektors aus der anderen der endständigen Stirnseiten austritt,
j. die Zelle umfasst ein zumindest teilweise metallisch ausgebildetes Kontaktelement, das in unmittelbarem Kontakt mit einem der ersten Längsränder steht und das mit diesem Längsrand bevorzugt durch Verschweißung verbunden ist,

### Bevorzugte Ausführungsformen des elektrochemischen Systems

Grundsätzlich umfasst die Erfindung Energiespeicherzellen unabhängig von ihrer elektrochemischen Ausgestaltung. In besonders bevorzugten Ausführungsformen ist die erfindungsgemäße Energiespeicherzelle jedoch eine Lithium-Ionen-Zelle, insbesondere eine sekundäre Lithium-lonen-Zelle. Für Anode und Kathode der Energiespeicherzelle können daher im Grunde sämtliche für sekundäre Lithium-Ionen-Zellen bekannten Elektrodenmaterialien verwendet werden.

In der negativen Elektrode einer als Lithium-Ionen-Zelle ausgebildeten erfindungsgemäßen Energiespeicherzelle können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in der negativen Elektrode enthalten sein, bevorzugt ebenfalls in Partikelform. Weiterhin kann die negative Elektrode als Aktivmaterial mindestens ein Material aus der Gruppe mit Silizium, Aluminium, Zinn, Antimon oder eine Verbindung oder Legierung dieser Materialien, die Lithium reversibel ein- und auslagern kann, beispielsweise Siliziumoxid, enthalten, gegebenenfalls in Kombination mit Aktivmaterialien auf Kohlenstoffbasis. Zinn, Aluminium, Antimon und Silizium in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches. Weiterhin sich auch dünne Anoden aus metallischem Lithium.

Für die positive Elektrode einer als Lithium-Ionen-Zelle ausgebildeten erfindungsgemäßen Energiespeicherzelle kommen als Aktivmaterialien beispielsweise Lithium-Metalloxid-Verbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel LiNiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O Verbindungen und/oder Mischungen der genannten Materialien können eingesetzt werden. Auch die kathodischen Aktivmaterialien werden bevorzugt partikulär eingesetzt.

Daneben enthalten die Elektroden einer als Lithium-Ionen-Zelle ausgebildeten erfindungsgemäßen Energiespeicherzelle bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei benachbarte Partikel in der Matrix bevorzugt in unmittelbarem Kontakt miteinander stehen. Leitmittel dienen dazu, die elektrische Leitfähigkeit der Elektroden zu erhöhen. Übliche Elektrodenbinder basieren beispielsweise auf Polyvinylidenfluorid (PVDF), Polyacrylat oder Carboxymethylzellulose. Übliche Leitmittel sind Ruß und Metallpulver.

Die erfindungsgemäße Energiespeicherzelle umfasst bevorzugt einen Elektrolyten, im Falle einer Lithium-Ionen-Zelle insbesondere einen Elektrolyten auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF₄), Lithiumbis(trifluoromethansulfonyl)imid (LiTFSI), Lithi-umbis(fluorosulfonyl)imid (LiFSI) und Lithiumbis(oxalato)borat (LiBOB).

### Bevorzugte Ausführungsformen des Separators

Der Elektroden-Separator-Verbund umfasst bevorzugt mindestens einen bandförmigen Separator, besonders bevorzugt zwei bandförmige Separatoren, der oder die jeweils einen ersten und einen zweiten Längsrand sowie zwei Endstücke aufweisen.

Bevorzugt werden die Separatoren aus elektrisch isolierenden Kunststofffolien gebildet. Es ist bevorzugt, dass die Separatoren von dem Elektrolyten durchdrungen werden kann. Zu diesem Zweck können die verwendeten Kunststofffolien beispielsweise Mikroporen aufweisen. Die Folie kann beispielsweise aus einem Polyolefin oder aus einem Polyetherketon bestehen. Auch Vliese und Gewebe aus Kunststoffmaterialien oder andere elektrisch isolierende Flächengebilde können als Separator zum Einsatz kommen. Bevorzugt werden Separatoren eingesetzt, die eine Dicke im Bereich von 5 µm bis 50 µm aufweisen.

In einigen Ausführungsformen kann es sich bei dem Separator oder den Separatoren des Verbundes auch um eine oder mehrere Schichten aus einem Festelektrolyten handeln.

### Bevorzugte Struktur des als Wickel ausgebildeten Elektroden-Separator-Verbunds

In dem als Wickel ausgebildeten Elektroden-Separator-Verbund liegen die bandförmige Anode, die bandförmige Kathode und der oder die bandförmigen Separatoren bevorzugt spiralförmig aufgewickelt vor. Zur Herstellung des Elektroden-Separator-Verbunds werden die bandförmigen Elektroden gemeinsam mit dem oder den bandförmigen Separatoren einer Wickelvorrichtung zugeführt und in dieser bevorzugt um eine Wickelachse herum spiralförmig aufgewickelt. In einigen Ausführungsformen werden die Elektroden und der Separator hierzu auf einen zylindrischen oder hohlzylindrischen Wickelkern aufgewickelt, der auf einem Wickeldorn sitzt und nach dem Wickeln im Wickel verbleibt. Der Wickelmantel kann beispielsweise durch eine Kunststoffolie oder ein Klebeband gebildet sein. Es ist auch möglich, dass der Wickelmantel durch eine oder mehrere Separatorwindungen gebildet ist.

### Bevorzugte Ausführungsformen der Stromkollektoren

Die Stromkollektoren der Energiespeicherzelle dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert. Im Falle einer als Lithium-Ionen-Zelle ausgebildeten erfindungsgemäßen Energiespeicherzelle eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Auch Edelstahl kommt grundsätzlich in Frage. Als Metall für den Kathodenstromkollektor eignen sich im Falle einer als Lithium-Ionen-Zelle ausgebildeten erfindungsgemäßen Energiespeicherzelle insbesondere Aluminium oder auch andere elektrisch leitfähige Materialien, darunter auch Aluminiumlegierungen.

Bevorzugt handelt es sich bei dem Anodenstromkollektor und/oder dem Kathodenstromkollektor jeweils um eine Metallfolie mit einer Dicke im Bereich von 4 µm bis 30 µm, insbesondere eine bandförmige Metallfolie mit einer Dicke im Bereich von 4 µm bis 30 µm.

Neben Folien können als Stromkollektoren allerdings auch andere bandförmige Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

Es ist bevorzugt, dass die Längsränder des oder der Separatoren die Stirnseiten des als Wickel ausgebildeten Elektroden-Separator-Verbunds bilden.

Es ist weiterhin bevorzugt, dass die aus den endständigen Stirnseiten des Wickels oder Seiten des Stapels austretenden Längsränder oder Ränder des Anodenstromkollektors und/oder des Kathodenstromkollektors nicht mehr als 5000 µm, bevorzugt nicht mehr als 3500 µm, aus den Stirnseiten oder den Seiten herausragen.

Besonders bevorzugt ragt der Rand oder der Längsrand des Anodenstromkollektors aus der Seite des Stapels oder der Stirnseite des Wickels nicht mehr als 2500 µm, besonders bevorzugt nicht mehr als 1500 µm, heraus. Besonders bevorzugt ragt der Rand oder der Längsrand des Kathodenstromkollektors aus der Seite des Stapels oder der Stirnseite des Wickels nicht mehr als 3500 µm, besonders bevorzugt nicht mehr als 2500 µm, heraus.

### Erfindungsgemäße Lösung

Besonders zeichnet sich die Zelle durch die zwei folgenden Merkmale k. und I. aus:
k. das Kontaktelement umfasst einen kreisförmigen Rand,
l. das Kontaktelement verschließt die endständige kreisförmige Öffnung des rohrförmig ausgebildeten Gehäuseteils.

Erfindungsgemäß wird also vorgeschlagen, als Kontaktelement eines mit einem kreisförmigen Rand einzusetzen und mit dem Kontaktelement die endständige kreisförmige Öffnung des rohrförmig ausgebildeten Gehäuseteils zu verschließen. Das Kontaktelement dient also nicht nur zum elektrischen Kontaktieren einer Elektrode, vielmehr fungiert es gleichzeitig als Gehäuseteil. Damit geht ein großer Vorteil einher, eine separate elektrische Verbindung zwischen dem Kontaktelement und einem Gehäuseteil ist nämlich nicht mehr erforderlich. Das schafft Raum innerhalb des Gehäuses und vereinfacht die Zellmontage. Zudem verleiht eine unmittelbare Anbindung eines Gehäuseteils an die Stromkollektoren einer Zelle dieser hervorragende Entwärmungseigenschaften.

### Bevorzugte Ausführungsformen des Kontaktelements / Elektrische Anbindung des Kontaktelements an den als Wickel ausgebildeten Elektroden-Separator-Verbund

In einer **ersten bevorzugten Erfindungsvariante** zeichnet sich die Energiespeicherzelle durch mindestens eines der vier unmittelbar folgenden Merkmale a. bis d. aus:
a. Das Kontaktelement ist oder umfasst eine Metallscheibe, deren Rand dem kreisförmigen Rand des Kontaktelements entspricht oder diesen mitbildet.
b. Die Metallscheibe ist derart in dem rohrförmig ausgebildeten Gehäuseteil angeordnet, dass ihr Rand entlang einer umlaufenden Kontaktzone an der Innenseite des rohrförmig ausgebildeten Gehäuseteils anliegt.
c. Der Rand der Metallscheibe ist mit dem rohrförmig ausgebildeten Gehäuseteil über eine umlaufende Schweißnaht verbunden.
d. Der eine der ersten Längsränder ist mit der Metallscheibe durch Verschweißung verbunden.

Besonders bevorzugt sind alle vier unmittelbar vorstehenden Merkmale a. bis d. in Kombination miteinander realisiert.

In der einfachsten Ausführungsformen handelt es sich bei der Metallscheibe um ein flaches Blechteil mit kreisförmigem Umfang, das sich nur in einer Ebene erstreckt. In vielen Fällen können aber auch aufwendigere Gestaltungen bevorzugt sein. So kann die Metallscheibe profiliert sein, beispielsweise um ihr Zentrum eine oder mehrere kreisförmige Vertiefungen und oder Erhöhungen, bevorzugt in konzentrischer Anordnung, aufweisen, was beispielsweise in einem wellenförmigen Querschnitt resultieren kann. Es ist auch möglich, dass ihre Innenseite einen oder mehrere Stege aufweist. Weiterhin kann die Scheibe einen Rand aufweisen, der radial nach innen umgebogen ist, so dass sie einen doppellagigen Randbereich mit beispielsweise U-förmigem Querschnitt aufweist.

Das Kontaktelement kann aus mehreren Einzelteilen, darunter die Metallscheibe, bestehen, die nicht zwingend alle aus Metall bestehen müssen. In einer besonders bevorzugten Ausführungsform kann das Kontaktelement beispielsweise einen profilierten metallischen Poldeckel mit kreisförmigem Umfang umfassen, der auf die Metallscheibe aufgeschweißt sein kann und näherungsweise oder exakt den gleichen Durchmesser wie die Metallscheibe aufweist, so dass der Rand der Metallscheibe und der Rand des Poldeckels gemeinsam den Rand des Kontaktelements bilden. In einer weiteren Ausführungsform kann der Rand des Poldeckels durch den erwähnten radial nach innen umgebogenen Rand der Metallscheibe umschlossen werden. In bevorzugten Ausführungsformen kann sogar eine Klemmverbindung zwischen den beiden Einzelteilen bestehen.

Damit der Rand der Metallscheibe an der Innenseite des rohrförmig ausgebildeten Gehäuseteils entlang der umlaufenden Kontaktzone anliegen kann, ist es bevorzugt, dass das rohrförmige Gehäuseteil zumindest in dem Abschnitt, in dem der Rand der Metallscheibe anliegt, einen kreisförmigen Querschnitt aufweist. Zweckmäßigerweise ist der Abschnitt hierfür hohlzylindrisch ausgebildet. Der Innendurchmesser des rohrförmigen Gehäuseteils ist in diesem Abschnitt entsprechend an den Außendurchmesser des Randes des Kontaktelements, insbesondere an den Außendurchmesser der Metallscheibe, angepasst.

Die Verschweißung des Randes der Metallscheibe mit dem rohrförmig ausgebildeten Gehäuseteil kann insbesondere mittels eines Lasers durchgeführt werden. Alternativ ist es aber auch möglich, die Metallscheibe durch Verlötung oder Verklebung zu fixieren.

Ein separates Dichtelement wird bei einer umlaufenden Schweißnaht nicht benötigt. Die Metallscheibe und das rohrförmige Gehäuseteil sind über die Schweißnaht dichtend miteinander verbunden. Darüber hinaus gewährleistet die Schweißverbindung auch eine nahezu widerstandfreie elektrische Verbindung zwischen der Metallscheibe und dem rohrförmigen Gehäuseteil.

In einer **zweiten bevorzugten Erfindungsvariante** zeichnet sich die Energiespeicherzelle durch mindestens eines der fünf unmittelbar folgenden Merkmale a. bis e. aus:
a. Das Kontaktelement ist oder umfasst eine Metallscheibe, deren Rand dem kreisförmigen Rand des Kontaktelements entspricht oder diesen mitbildet.
b. Die Metallscheibe ist derart in dem rohrförmig ausgebildeten Gehäuseteil angeordnet, dass ihr Rand entlang einer umlaufenden Kontaktzone an der Innenseite des rohrförmig ausgebildeten Gehäuseteils anliegt.
c. Der Rand der Metallscheibe ist mit dem rohrförmig ausgebildeten Gehäuseteil über eine umlaufende Schweißnaht verbunden.
d. Das Kontaktelement umfasst ein metallisches Kontaktblech mit zwei Seiten, von denen eine in Richtung der Metallscheibe weist und bevorzugt durch Verschweißung mit der Metallscheibe verbunden ist.
e. Der eine der ersten Längsränder liegt unmittelbar an der anderen Seite des Kontaktblechs an und ist mit dieser bevorzugt durch Verschweißung verbunden.

Besonders bevorzugt sind alle fünf unmittelbar vorstehenden Merkmale a. bis e. in Kombination miteinander realisiert.

Bezüglich einiger Merkmale unterscheidet sich die zweite bevorzugte Erfindungsvariante nicht von der ersten, so etwa im Umfang der Merkmale a. bis c.. Zu diesen Merkmalen muss somit auch nicht mehr separat ausgeführt werden. Bezüglich bevorzugter Ausführungsformen dieser Merkmale wird auf die vorstehenden Erläuterungen im Zusammenhang mit der ersten bevorzugten Erfindungsvariante verwiesen.

Die Verschweißung des Randes der Metallscheibe mit dem rohrförmig ausgebildeten Gehäuseteil kann auch hier insbesondere mittels eines Lasers durchgeführt werden. Alternativ ist es aber auch möglich, die Metallscheibe durch Verlötung oder Verklebung zu fixieren.

Im Unterschied zur ersten bevorzugten Erfindungsvariante umfasst das Kontaktelement neben der Metallscheibe allerdings das Kontaktblech gemäß Merkmal d. als weitere Komponente, wobei der eine der ersten Längsränder nicht unmittelbar an der Metallscheibe sondern stattdessen unmittelbar an dem Kontaktblech anliegt. Die Metallscheibe dient zum Verschließen des Gehäuses, während das Kontaktblech den Längsrand des Stromkollektors kontaktiert.

In einer einfachen Ausführungsform handelt es sich bei dem Kontaktblech um ein flaches Blechteil, das sich nur in einer Ebene erstreckt, in anderen Ausführungsformen kann es auch ein profiliertes Blechteil sein. Insbesondere ist auch möglich, dass es auf der mit dem Längsrand in Kontakt stehenden Seite einen oder mehrere Stege oder längliche Vertiefungen aufweist.

Das Kontaktblech kann in einigen bevorzugten Ausführungsforen einen kreisförmigen Umfang aufweisen, zwingend erforderlich ist dies aber keineswegs. In einigen Fällen kann das Kontaktblech beispielsweise ein Metallstreifen sein oder mehrere streifenförmige Segmente aufweisen, die beispielsweise in einer sternförmigen Anordnung vorliegen.

In einigen Ausführungsformen kann ein Kontaktblech verwendet werden, das mindestens einen Schlitz und/oder mindestens eine Perforierung aufweist. Diese können dazu dienen, einer Verformung des Kontaktblechs bei der Herstellung einer Schweißverbindung zu dem ersten Längsrand entgegenzuwirken.

Die zur Metallscheibe weisende Seite des Kontaktblechs ist bevorzugt derart ausgebildet, dass bei einem unmittelbaren Kontakt des Kontaktblechs mit der Metallscheibe eine zweidimensionale Kontaktfläche vorliegt, das Kontaktblech und die Metallscheibe also zumindest bereichsweise flach aufeinander liegen.

Bevorzugt stehen das Kontaktblech und die Metallscheibe in starrem, weiter bevorzugt in starrem, unmittelbarem Kontakt miteinander. In diesem Fall sind sie besonders bevorzugt durch Verschweißung oder Verlötung aneinander fixiert.

In besonders bevorzugten Ausführungsformen ist das Kontaktblech ausgebildet wie die in der WO 2017/215900 A1 beschriebenen Kontaktplatten.

In einer **dritten bevorzugten Erfindungsvariante** zeichnet sich die Energiespeicherzelle durch mindestens eines der sechs unmittelbar folgenden Merkmale a. bis g. aus:
a. Das Kontaktelement ist oder umfasst eine Metallscheibe, deren Rand dem kreisförmigen Rand des Kontaktelements entspricht oder diesen mitbildet.
b. Die Metallscheibe ist derart in dem rohrförmig ausgebildeten Gehäuseteil angeordnet, dass ihr Rand entlang einer umlaufenden Kontaktzone an der Innenseite des rohrförmig ausgebildeten Gehäuseteils anliegt.
c. Der Rand der Metallscheibe ist mit dem rohrförmig ausgebildeten Gehäuseteil über eine umlaufende Schweißnaht verbunden.
d. Das Kontaktelement umfasst ein metallisches Kontaktblech mit zwei Seiten, von denen eine in Richtung der Metallscheibe weist.
e. Das Kontaktelement umfasst einen Polstift (108), der an dem Kontaktblech fixiert ist und durch eine Durchbrechung in der Metallscheibe aus dem Gehäuse der Zelle herausgeführt ist.
f. Das Kontaktelement umfasst mindestens ein Isoliermittel, das den Polstift (108) und/oder das Kontaktblech gegen die Metallscheibe elektrisch isoliert.
g. Der eine der ersten Längsränder liegt unmittelbar an der anderen Seite des Kontaktblechs an und ist mit dieser bevorzugt durch Verschweißung verbunden.

Besonders bevorzugt sind alle fünf unmittelbar vorstehenden Merkmale a. bis g. in Kombination miteinander realisiert.

Bezüglich einiger Merkmale unterscheidet sich die dritte bevorzugte Erfindungsvariante nicht von der ersten und der zweiten, so etwa im Umfang der Merkmale a. bis d.. Zu diesen Merkmalen muss somit auch nicht mehr separat ausgeführt werden. Bezüglich bevorzugter Ausführungsformen der Merkmale a. bis c. wird auf die vorstehenden Erläuterungen im Zusammenhang mit der ersten bevorzugten Erfindungsvariante verwiesen. Bezüglich bevorzugter Ausführungsformen des Merkmals d., insbesondere betreffend mögliche Ausgestaltungen des Kontaktblechs, wird auf die vorstehenden Erläuterungen im Zusammenhang mit der zweiten bevorzugten Erfindungsvariante verwiesen.

Die Verschweißung des Randes der Metallscheibe mit dem rohrförmig ausgebildeten Gehäuseteil kann auch hier insbesondere mittels eines Lasers durchgeführt werden. Alternativ ist es aber auch möglich, die Metallscheibe durch Verlötung oder Verklebung zu fixieren.

Im Unterschied zur zweiten bevorzugten Erfindungsvariante umfasst das Kontaktelement bei der dritten Variante allerdings ein den Polstift als weitere Komponente. Dieser ist bevorzugt durch Verschweißung oder Verlötung an dem Kontaktblech fixiert. Gegen die Metallscheibe ist er mittels des Isoliermittels elektrisch isoliert, welches bevorzugt gleichzeitig eine Dichtungsfunktion innehat.

Bei dem Isoliermittel kann es sich vorzugsweise um eine übliche Kunststoffdichtung handeln, die chemisch beständig gegenüber den jeweils verwendeten Elektrolyten sein sollte. Dem Fachmann auf dem Gebiet primärer und sekundärer Energiespeicherelemente sind geeignete Dichtungsmaterialien bekannt. In alternativen bevorzugten Ausführungsformen können auch Gläser sowie keramische und glaskeramische Massen als Isoliermittel verwendet werden.

### Mögliche bevorzugte Ausführungsformen betreffend die Verschweißung von Längsrändern an das Kontaktblech oder die Metallscheibe des Kontaktelements

Sowohl bei der ersten als auch bei der zweiten oder dritten bevorzugten Erfindungsvariante ist ein Längsrand eines Stromkollektors bevorzugt durch Verschweißung an das Kontaktelement angebunden, in einem Fall unmittelbar an die Metallscheibe des Kontaktelements, in anderen Fällen an das Kontaktblech. Nachfolgend werden einige Kontaktierungsvarianten vorgestellt, gemäß denen die Anbindung des Längsrands an das Kontaktblech oder an die Metallscheibe ausgestaltet sein kann.

Das Konzept der Verschweißung der Ränder von Stromkollektoren mit Kontaktelementen ist bereits aus der WO 2017/215900 A1 oder aus der JP 2004-119330 A bekannt. Diese Technologie ermöglicht besonders hohe Strombelastbarkeiten und einen geringen Innenwiderstand. Bezüglich Verfahren zur elektrischen Verbindung von Kontaktelementen, insbesondere auch von scheibenförmigen Kontaktelementen, mit den Rändern von Stromkollektoren wird daher auf den Inhalt der WO 2017/215900 A1 und der JP 2004-119330 A vollumfänglich Bezug genommen.

Besonders bevorzugt liegt der eine der ersten Längsränder der Länge nach unmittelbar an der Metallscheibe oder fallweise an dem Kontaktblech an. Dadurch bedingt ergibt sich eine linienartige Kontaktzone, die im Falle der spiralförmig aufgewickelten Elektroden einen spiralförmigen Verlauf aufweist. Es ist bevorzugt, dass entlang dieser linien- und bevorzugt spiralförmigen Kontaktzone mittels geeigneter Schweißverbindungen eine möglichst gleichmäßige Anbindung des Längsrands an die Metallscheibe oder das Kontaktblech besteht. Besonders bevorzugt kann diese Anbindung wie folgt ausgestaltet sein:
- Kontaktierungsvariante 1: Der Längsrand des unmittelbar an der Metallscheibe oder an dem Kontaktblech anliegenden Stromkollektors ist über seine gesamte Länge über eine Schweißnaht durchgehend mit der Metallscheibe oder dem Kontaktblech verbunden.
- Kontaktierungsvariante 2: Der Längsrand des unmittelbar an der Metallscheibe oder an dem Kontaktblech anliegenden Stromkollektors umfasst einen oder mehrere Abschnitte, die jeweils über ihre gesamte Länge über eine Schweißnaht durchgehend mit der Metallscheibe oder dem Kontaktblech verbunden sind. Besonders bevorzugt weisen diese Abschnitte eine Mindestlänge von 5 mm, bevorzugt von 10 mm, besonders bevorzugt von 20 mm, auf.
- Kontaktierungsvariante 3: Der Längsrand des unmittelbar an der Metallscheibe oder an dem Kontaktblech anliegenden Stromkollektors ist über eine Vielzahl von punktförmigen Schweißverbindungen mit der Metallscheibe oder dem Kontaktblech verbunden (sogenannte Multi-Pin-Verbindung).

Selbstverständlich können unter diesen drei Kontaktierungsvarianten die zweite und die dritte auch miteinander kombiniert werden.

In einer möglichen Weiterbildung der zweiten Kontaktierungsvariante erstrecken sich der oder die mit der Metallscheibe oder dem Kontaktblech über ihre gesamte Länge durchgehend verbundenen Abschnitte über mindestens 25 %, bevorzugt über mindestens 50 %, besonders bevorzugt über mindestens 75 %, der Gesamtlänge des jeweiligen Längsrandes.

Es ist besonders bevorzugt, dass sich die Metallscheibe und/oder das Kontaktblech durch mindestens eines der unmittelbar folgenden Merkmale a. und b. auszeichnet:
a. Die verwendete Metallscheibe und/oder das verwendete Kontaktblech weist bevorzugt eine Dicke im Bereich von 50 µm bis 600 µm, bevorzugt im Bereich von 150 µm bis 350 µm, auf.
b. Die Metallscheibe und/oder das Kontaktblech besteht aus legiertem oder unlegiertem Aluminium, legiertem oder unlegiertem Titan, legiertem oder unlegiertem Nickel oder legiertem oder unlegiertem Kupfer, aber gegebenenfalls auch aus Edelstahl (beispielsweise vom Typ 1.4303 oder 1.4404) oder aus vernickeltem Stahl.

Es ist besonders bevorzugt, dass die unmittelbar vorstehenden Merkmale a. und b. in Kombination realisiert sind.

Wenn es sich bei dem Längsrand, der unmittelbar an der Metallscheibe oder fallweise unmittelbar an dem Kontaktblech anliegt, insbesondere daran geschweißt ist, um den Längsrand des Anodenstromkollektors handelt, so bestehen der Anodenstromkollektor und die Metallscheibe oder der Anodenstromkollektor und das Kontaktblech bevorzugt beide aus dem gleichen oder zumindest aus einem chemisch verwandten Material, beispielsweise aus Kupfer und einer Kupferlegierung. Im Falle einer als Lithium-Ionen-Zelle ausgebildeten erfindungsgemäßen Energiespeicherzelle wird das Material bevorzugt aus der Gruppe mit Kupfer, Nickel, Titan, Legierungen diese drei Elemente, vernickeltem Stahl und Edelstahl gewählt. Im Fall einer Lithiumtitanat-Anode können der Anodenstromkollektor und die Metallscheibe oder der Anodenstromkollektor und das Kontaktblech aber auch aus Aluminium bestehen.

Wenn es sich bei dem Längsrand, der unmittelbar an der Metallscheibe oder fallweise unmittelbar an dem Kontaktblech anliegt, insbesondere daran geschweißt ist, um den Längsrand des Kathodenstromkollektors handelt, so bestehen der Kathodenstromkollektor und die Metallscheibe oder der Kathodenstromkollektor und das Kontaktblech bevorzugt beide aus dem gleichen oder zumindest aus einem chemisch verwandten Material, beispielsweise aus Aluminium und aus einer Aluminiumlegierung. Dieses wird besonders bevorzugt aus der Gruppe mit legiertem oder unlegiertem Aluminium, Titan, Titanlegierungen und Edelstahl (z.B. vom Typ 1.4404) gewählt.

Wenn das Kontaktelement sowohl die Metallscheibe als auch das Kontaktblech umfasst, so bestehen auch das Kontaktblech und die Metallscheibe aus stofflicher Sicht bevorzugt beide aus dem gleichen oder zumindest aus einem chemisch verwandten Material. Es besteht gleichsam bevorzugt aus dem gleichen Material wie der daran anliegende Stromkollektor oder aus einem chemisch verwandten Material.

Wenn die mit dem Kontaktblech kombiniert ist, besteht sie in einigen bevorzugten Ausführungsformen aus Edelstahl, beispielsweise vom Typ 1.4303 oder 1.4404.

Besonders bevorzugt zeichnet sich die Energiespeicherzelle, insbesondere in den beschriebenen Ausführungsformen der ersten bis dritten bevorzugten Erfindungsvariante, durch mindestens eines der zwei unmittelbar folgenden zusätzlichen Merkmale a. und b. aus:
a. Das rohrförmig ausgebildete Gehäuseteil umfasst in axialer Richtung einen Zentralabschnitt, in dem der Wickelmantel an seiner Innenseite anliegt, sowie einen Kontaktabschnitt, in dem der Rand der Metallscheibe an seiner Innenseite anliegt.
b. Das rohrförmig ausgebildete Gehäuseteil umfasst einen kreisförmigen Rand, der radial nach innen über den Rand des Kontaktelements umgebogen ist.

Entsprechend den obigen Ausführungen zur bevorzugten Ausgestaltung des rohrförmig ausgebildete Gehäuseteils im Bereich der Kontaktzone ist der Kontaktabschnitt bevorzugt zylindrisch oder präziser hohlzylindrisch ausgebildet. Gleiches gilt hinsichtlich der Gestaltung des Zentralabschnitts.

### Gehäusevariante mit Gehäusebecher

In einer besonders bevorzugten Ausführungsform der Erfindung zeichnet sich die Energiespeicherzelle durch mindestens eines der unmittelbar folgenden zusätzlichen Merkmale a. und b. aus:
a. Das rohrförmig ausgebildete Gehäuseteil (101) ist Bestandteil eines Gehäusebechers, der einen kreisförmigen Boden umfasst.
b. Der andere der ersten Längsränder liegt unmittelbar an dem Boden an und ist mit dem Boden bevorzugt durch Verschweißung verbunden.

Besonders bevorzugt sind die unmittelbar vorstehenden Merkmale a. und b. in Kombination realisiert.

Die Verwendung von Gehäusebechern ist beim Bau von Zellgehäusen seit langem bekannt, so etwa aus der eingangs erwähnten WO 2017/215900 A1. Nicht bekannt ist hingegen die unmittelbare Anbindung der Längsränder eines Stromkollektors an den Boden eines Gehäusebechers, wie es hier vorgeschlagen wird. Auch diese Maßnahme ermöglicht den Verzicht eines separaten elektrischen Leiters, nunmehr bodenseitig, sowie die Verwendung eines axial verlängerten gewickelten Elektroden-Separator-Verbunds und trägt somit dazu bei, die Energiedichte der erfindungsgemäßen Zelle zu erhöhen und ihre Entwärmungseigenschaften zu verbessern.

Gemäß der vorliegenden Erfindung ist es also möglich und bevorzugt, die aus gegenüberliegenden Stirnseiten eines als Wickel ausgebildeten Elektroden-Separator-Verbunds austretenden Stromkollektorränder von positiver und negativer Elektrode jeweils unmittelbar an ein Gehäuseteil, nämlich den Boden des Bechers und das oben beschriebene, als Verschlusselement fungierende Kontaktelement, anzukoppeln. Die Nutzung des verfügbaren Innenvolumens des Zellgehäuses für aktive Komponenten nähert sich so ihrem theoretischen Optimum.

Der Gehäusebecher weist, insbesondere im Bereich seines Bodens, bevorzugt eine ähnliche Dicke auf wie die Metallscheibe und/oder das Kontaktblech des Kontaktelements, also insbesondere eine Dicke im Bereich von 50 µm bis 600 µm, bevorzugt im Bereich von 150 µm bis 350 µm.

Insbesondere wenn die erfindungsgemäße Zelle als Lithium-Ionen-Zelle ausgestaltet ist, hängt die Wahl des Materials, aus dem der Gehäusebecher oder zumindest der Boden des Gehäusebechers gefertigt wird, davon ab, ob der Anoden- oder der Kathodenstromkollektor an den Boden angebunden ist. Bevorzugt sind grundsätzlich die gleichen Materialien, aus denen die Stromkollektoren selbst gefertigt werden. Der Gehäusebecher bzw. der Boden des Gehäusebechers können also aus den folgenden Materialien bestehen:
Legiertes oder unlegiertes Aluminium, legiertes oder unlegiertes Titan, legiertes oder unlegiertes Nickel, legiertes oder unlegiertes Kupfer, Edelstahl (beispielsweise vom Typ 1.4303 oder 1.4404), vernickelter Stahl.

Weiterhin kann das Gehäuse aus mehrschichtigen Materialien (engl.: Clad Materials) bestehen, beispielsweise eine Schicht aus einem Stahl und eine Schicht aus Aluminium oder Kupfer umfassen. Die Schicht aus Aluminium oder die Schicht aus Kupfer bildet in diesen Fällen bevorzugt die Innenseite des Gehäusebechers bzw. des Bodens des Gehäusebechers.

Grundsätzlich ist es auch möglich, dass - wie im Falle des Kontaktelements, zwischen dem Längsrand des anderen der ersten Längsränder und dem Boden des Bechers lediglich eine mittelbare Verbindung über ein Kontaktblech besteht. In diesem Fall besteht zwischen dem Längsrand und dem Kontaktblech bevorzugt eine Schweißverbindung gemäß einer der drei oben beschriebenen Kontaktierungsvarianten während das Kontaktblech mit dem Boden bevorzugt durch unmittelbare Verschweißung verbunden ist. Das Kontaktblech ist bevorzugt ausgestaltet wie sein Pendant im Falle des oben beschriebenen Kontaktelements.

Die Ankopplung des anderen der ersten Längsränder an den Boden oder an das Kontaktblech folgt grundsätzlich den gleichen konstruktiven Prinzipien wie im Fall der Ankopplung des einen der ersten Längsränder an das Kontaktelement. Auch hier liegt der Längsrand bevorzugt der Länge nach unmittelbar am Boden an so dass sich eine linienartige Kontaktzone ergibt, die im Falle der spiralförmig aufgewickelten Elektroden einen spiralförmigen Verlauf aufweist. Weiterhin ist auch hier bevorzugt, dass entlang dieser linien- und bevorzugt spiralförmigen Kontaktzone mittels geeigneter Schweißverbindungen eine möglichst gleichmäßige Anbindung des Längsrands an den Boden oder an das Kontaktblech besteht. Diese Anbindung ist bevorzugt gemäß einer der drei oben beschriebenen Kontaktierungsvarianten oder einer Kombination dieser Kontaktierungsvarianten ausgestaltet, also beispielsweise als Multi-Pin-Verbindung.

### Gehäusevariante mit zwei Deckeln

In einer weiteren besonders bevorzugten Ausführungsform der Erfindung zeichnet sich die Energiespeicherzelle durch mindestens eines der drei unmittelbar folgenden zusätzlichen Merkmale a. bis c. aus:
a. Das rohrförmig ausgebildete Gehäuseteil weist eine weitere endständige kreisförmige Öffnung auf.
b. Die Zelle umfasst ein Verschlusselement mit einem kreisförmigen Rand, das diese weitere endständige Öffnung verschließt.
c. Das Verschlusselement für die weitere endständige Öffnung ist oder umfasst eine Metallscheibe, deren Rand dem kreisförmigen Rand des metallischen Verschlusselements entspricht oder diesen mitbildet.

Besonders bevorzugt sind die unmittelbar vorstehenden Merkmale a. bis c. in Kombination realisiert.

In dieser Ausführungsform ersetzt das rohrförmig ausgebildete Gehäuseteil gemeinsam mit einem Verschlusselement einen Gehäusebecher. Das Gehäuse setzt sich also aus drei Gehäuseteilen zusammen, von denen eines rohrförmig ausgebildet ist und die anderen beiden (das Kontaktelement und das Verschlusselement) die endständigen Öffnungen des rohrförmigen Teils als Deckel verschließen. Produktionstechnisch bietet dies Vorteile, da für die Herstellung rohrförmiger Gehäuseteile, anders als bei Gehäusebechern, keine Tiefziehwerkzeuge benötigt werden. Daneben resultieren bei einer unmittelbaren Anbindung des anderen der ersten Längsränder an das Verschlusselement grundsätzlich die gleichen Vorteile wie bei der oben beschriebenen Anbindung an den Boden eines Gehäusebechers.

Das rohrförmig ausgebildete Gehäuseteil ist in dieser Ausführungsform bevorzugt zylindrisch bzw. hohlzylindrisch ausgebildet. Bei dem Verschlusselement handelt es sich, in Analogie zu dem oben beschriebenen Kontaktelement, in der einfachsten Ausführungsform um eine Metallscheibe mit kreisförmigem Umfang, die sich nur in einer Ebene erstreckt, oder alternativ um eine profilierte Metallscheibe, die beispielsweise um ihr Zentrum eine oder mehrere kreisförmige Vertiefungen und/oder Erhöhungen, bevorzugt in konzentrischer Anordnung, aufweist, was beispielsweise in einem wellenförmigen Querschnitt resultieren kann. Gleichfalls bevorzugt kann die Innenseite des Verschlusselements, insbesondere der Metallscheibe, einen oder mehrere Stege aufweist. Weiterhin kann das Verschlusselement, insbesondere die Metallscheibe, auch einen Rand aufweisen, der radial nach innen umgebogen ist, so dass es oder sie einen doppellagigen Randbereich mit beispielsweise U-förmigem Querschnitt aufweist.

In einer weiteren Ausführungsform kann das Verschlusselement, insbesondere die Metallscheibe, auch einen Rand aufweisen, der um 90° umgebogen ist, so dass er einen L-förmigen Querschnitt aufweist.

Bei der Wahl des Materials und der bevorzugten Dicke des Verschlusselements, insbesondere der Metallscheibe, kann gleichfalls auf die obigen Ausführungen zur Metallscheibe des Kontaktelements verwiesen werden. Die dort genannten bevorzugten Merkmale gelten auch für das Verschlusselement.

In einer Weiterbildung dieser besonders bevorzugten Ausführungsform zeichnet sich die Energiespeicherzelle durch mindestens eines der unmittelbar folgenden Merkmale a. bis c. aus:
a. Die Metallscheibe ist derart in dem rohrförmig ausgebildeten Gehäuseteil angeordnet, dass ihr Rand entlang einer umlaufenden Kontaktzone an der Innenseite des rohrförmig ausgebildeten Gehäuseteils anliegt.
b. Der Rand der Metallscheibe ist mit dem rohrförmig ausgebildeten Gehäuseteil über eine umlaufende Schweißnaht verbunden.
c. Das rohrförmig ausgebildete Gehäuseteil umfasst einen kreisförmigen Rand, der radial nach innen über den Rand des Verschlusselements, insbesondere den Rand der Metallscheibe, umgebogen ist.

Besonders bevorzugt sind die unmittelbar vorstehenden Merkmale a. und b., gegebenenfalls auch die unmittelbar vorstehenden Merkmale a. bis c., in Kombination realisiert.

Gemäß dieser Weiterbildung ist es also bevorzugt, das Verschlusselement durch Verschwei-βung in der weiteren endständigen Öffnung zu fixieren. Ein separates Dichtelement wird bei einer umlaufenden Schweißnaht auch hier nicht benötigt.

Das radiale Umbiegen des Randes des Verschlusselements ist eine fakultative Maßnahme, die zum Fixieren des Verschlusselements nicht benötigt wird, ungeachtet dessen aber zweckmäßig sein kann.

In einer Weiterbildung zeichnet sich die Energiespeicherzelle gemäß der weiteren besonders bevorzugten Ausführungsform der Erfindung durch eines der unmittelbar folgenden Merkmale a. bis c. aus:
a. Der andere der ersten Längsränder liegt unmittelbar an der Metallscheibe an und ist mit der Metallscheibe bevorzugt durch Verschweißung verbunden.
b. Der andere der ersten Längsränder ist an ein Kontaktblech geschweißt, das unmittelbar an der Metallscheibe anliegt.

Grundsätzlich ist es auch hier möglich, dass - wie im Falle des Kontaktelements, zwischen dem Längsrand des anderen der ersten Längsränder und der Metallscheibe bzw. dem Verschlusselement lediglich eine mittelbare Verbindung über ein Kontaktblech besteht. In diesem Fall besteht zwischen dem Kontaktblech und dem Verschlusselement, insbesondere der Metallscheibe des Verschlusselements, bevorzugt eine Verbindung durch unmittelbare Verschweißung. Das Kontaktblech ist bevorzugt ausgestaltet wie sein Pendant im Falle des oben beschriebenen Kontaktelements. Insbesondere gilt, dass eine zur Metallscheibe des Verschlusselements weisende Seite des Kontaktblechs in unmittelbarem Kontakt mit der Metallscheibe steht so dass eine zweidimensionale Kontaktfläche vorliegt, das Kontaktblech und die Metallscheibe des Verschlusselements also zumindest bereichsweise flach aufeinander liegen.

Bei der Wahl des Materials und der bevorzugten Dicke des Kontaktblechs kann auch hier auf die obigen Ausführungen zum Kontaktblech des Kontaktelements verwiesen werden. Die dort genannten bevorzugten Merkmale gelten auch für das Kontaktblech des Verschlusselements.

Die Ankopplung des anderen der ersten Längsränder an die Metallscheibe oder das Kontaktblech des Verschlusselements folgt grundsätzlich den gleichen konstruktiven Prinzipien wie im Fall der Ankopplung des einen der ersten Längsränder an das Kontaktelement. Auch hier liegt der Längsrand bevorzugt der Länge nach unmittelbar an der Metallscheibe oder an dem Kontaktblech an, so dass sich eine linienartige Kontaktzone ergibt, die im Falle der spiralförmig aufgewickelten Elektroden einen spiralförmigen Verlauf aufweist. Weiterhin ist auch hier bevorzugt, dass entlang dieser linien- und bevorzugt spiralförmigen Kontaktzone mittels geeigneter Schweißverbindungen eine möglichst gleichmäßige Anbindung des Längsrands an die Metallscheibe oder das Kontaktblech des Verschlusselements besteht. Diese Anbindung ist bevorzugt gemäß einer der drei oben beschriebenen Kontaktierungsvarianten oder einer Kombination dieser Kontaktierungsvarianten ausgestaltet, also beispielsweise als Multi-Pin-Verbindung.

### Bevorzugte Ausgestaltungen der Elektroden

In den freien Randstreifen ist das Metall des jeweiligen Stromkollektors bevorzugt frei von dem jeweiligen Elektrodenmaterial. In einigen bevorzugten Ausführungsformen ist das Metall des jeweiligen Stromkollektors dort unbedeckt, so dass es für elektrische Kontaktierungen, beispielsweise durch Verschweißung, zur Verfügung steht.

In einigen weiteren Ausführungsformen kann das Metall des jeweiligen Stromkollektors in den freien Randstreifen aber auch zumindest bereichsweise mit einem Stützmaterial beschichtet sein, das thermisch beständiger als der damit beschichtete Stromkollektor ist und das sich von dem auf dem jeweiligen Stromkollektor angeordneten Elektrodenmaterial unterscheidet.

"Thermisch beständiger" soll hierbei bedeuten, dass das Stützmaterial bei einer Temperatur, bei der das Metall des Stromkollektors schmilzt, seinen festen Zustand behält. Es weist also entweder einen höheren Schmelzpunkt als das Metall auf oder aber es sublimiert oder zersetzt sich erst bei einer Temperatur, bei der das Metall bereits geschmolzen ist.

Das im Rahmen der vorliegenden Erfindung einsetzbare Stützmaterial kann grundsätzlich ein Metall oder eine Metalllegierung sein, sofern dieses oder diese einen höheren Schmelzpunkt aufweist als das Metall, aus dem die Oberfläche besteht, die mit dem Stützmaterial beschichtet ist. In vielen Ausführungsformen zeichnet sich die erfindungsgemäße Energiespeicherzelle allerdings bevorzugt durch mindestens eines der unmittelbar folgenden zusätzlichen Merkmale a. bis d. aus:
a. Bei dem Stützmaterial handelt es sich um ein nichtmetallisches Material.
b. Bei dem Stützmaterial handelt es sich um ein elektrisch isolierendes Material.
c. Bei dem nichtmetallischen Material handelt es sich um ein keramisches Material, ein glaskeramisches Material oder um ein Glas.
d. Bei dem keramischen Material handelt es sich um Aluminiumoxid (Al₂O₃), um Titanoxid (TiO₂), um Titannitrid (TiN), um Titanaluminiumnitrid (TiAIN), um ein Siliziumoxid, insbesondere Siliziumdioxid (SiO₂), oder um Titancarbonitrid (TiCN).

Erfindungsgemäß ist das Stützmaterial besonders bevorzugt gemäß dem unmittelbar vorstehenden Merkmal b. und insbesondere bevorzugt gemäß dem unmittelbar vorstehenden Merkmal d. ausgebildet.

Der Begriff nichtmetallisches Material umfasst insbesondere Kunststoffe, Gläser und keramische Materialien.

Der Begriff elektrisch isolierendes Material ist vorliegend breit auszulegen. Er umfasst grundsätzlich jedes elektrisch isolierende Material, insbesondere auch besagte Kunststoffe.

Der Begriff keramisches Material ist vorliegend breit auszulegen. Insbesondere sind hierunter Carbide, Nitride, Oxide, Silicide oder Mischungen und Derivate dieser Verbindungen zu verstehen.

Mit dem Begriff "glaskeramisches Material" ist insbesondere ein Material gemeint, das kristalline Teilchen umfasst, die in eine amorphe Glasphase eingebettet sind.

Der Begriff "Glas" meint grundsätzlich jedes anorganische Glas, das den oben definierten Kriterien an thermische Stabilität genügt und das gegenüber einem gegebenenfalls in der Zelle anwesenden Elektrolyten chemisch stabil ist.

Besonders bevorzugt besteht der Anodenstromkollektor aus Kupfer oder einer Kupferlegierung während gleichzeitig der Kathodenstromkollektor aus Aluminium oder einer Aluminiumlegierung besteht und das Stützmaterial Aluminiumoxid oder Titanoxid ist.

Es kann weiterhin bevorzugt sein, dass freie Randstreifen des Anoden- und/oder des Kathodenstromkollektors mit einem Streifen aus dem Stützmaterial beschichtet sind.

Die Hauptbereiche, insbesondere die bandförmigen Hauptbereiche von Anodenstromkollektor und Kathodenstromkollektor, erstrecken sich bevorzugt parallel zu den jeweiligen Rändern oder Längsrändern der Stromkollektoren. Bevorzugt erstrecken sich die bandförmigen Hauptbereiche über mindestens 90 %, besonders bevorzugt über mindestens 95 %, der Flächen von Anodenstromkollektor und Kathodenstromkollektor.

In einigen bevorzugten Ausführungsformen wird das Stützmaterial unmittelbar neben den bevorzugt bandförmigen Hauptbereichen in Form eines Streifens oder einer Linie aufgebracht, bedeckt die freien Bereiche dabei jedoch nicht vollständig, so dass unmittelbar entlang des Längsrands das Metall des jeweiligen Stromkollektors frei liegt.

### Sonstige bevorzugte Ausgestaltungen der Energiespeicherzelle

Bei der erfindungsgemäßen Energiespeicherzelle kann es sich um eine Knopfzelle handeln. Knopfzellen sind zylindrisch ausgebildet und weisen eine Höhe auf, die geringer als ihr Durchmesser ist. Bevorzugt liegt die Höhe im Bereich von 4 mm bis 15 mm. Weiter ist es bevorzugt, dass die Knopfzelle einen Durchmesser im Bereich von 5 mm bis 25 mm aufweist. Knopfzellen eignen sich beispielsweise zur Versorgung von kleinen elektronischen Geräten wie Uhren, Hörgeräten und kabellosen Kopfhörern mit elektrischer Energie.

Die Nennkapazität einer als Lithium-Ionen-Zelle ausgebildeten erfindungsgemäßen Knopfzelle beträgt in der Regel bis zu 1500 mAh. Bevorzugt liegt die Nennkapazität im Bereich von 100 mAh bis 1000 mAh, besonders bevorzugt im Bereich von 100 bis 800 mAh.

Besonders bevorzugt ist die erfindungsgemäße Energiespeicherzelle jedoch eine zylindrische Rundzelle. Zylindrische Rundzellen weisen eine Höhe auf, die größer als ihr Durchmesser ist. Sie eignen sich insbesondere für die eingangs genannten Anwendungen mit hohem Energiebedarf, beispielsweise im Automobilbereich oder für E-Bikes oder für Elektrowerkzeuge.

Bevorzugt liegt die Höhe als Rundzelle ausgebildeter Energiespeicherzellen im Bereich von 15 mm bis 150 mm. Der Durchmesser der zylindrischen Rundzellen liegt bevorzugt im Bereich von 10 mm bis 60 mm. Innerhalb dieser Bereiche sind Formfaktoren von beispielsweise 18 x 65 (Durchmesser mal Höhe in mm) oder 21 x 70 (Durchmesser mal Höhe in mm) besonders bevorzugt. Zylindrische Rundzellen mit diesen Formfaktoren eignen sich insbesondere zur Stromversorgung elektrischer Antriebe von Kraftfahrzeugen.

Die Nennkapazität der als Lithium-Ionen-Zelle ausgebildeten erfindungsgemäßen zylindrischen Rundzelle beträgt bevorzugt bis zu 90000 mAh. Mit dem Formfaktor von 21 x 70 hat die Zelle in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

Der Anodenstromkollektor, der Kathodenstromkollektor und der Separator sind in Ausführungsformen, bei denen die erfindungsgemäße Zelle eine zylindrische Rundzelle ist, bevorzugt bandförmig ausgebildet und weisen bevorzugt die folgenden Dimensionen auf:
- Eine Länge im Bereich von 0,5 m bis 25 m
- Eine Breite im Bereich 30 mm bis 145 mm

Der freie Randstreifen, der sich entlang des ersten Längsrands erstreckt und der nicht mit dem Elektrodenmaterial beladen ist, weist in diesen Fällen bevorzugt eine Breite von nicht mehr als 5000 µm auf.

Im Falle einer zylindrischen Rundzelle mit dem Formfaktor 18 x 65 weisen die Stromkollektoren bevorzugt
- eine Breite von 56 mm bis 62 mm, bevorzugt von 60 mm, und
- eine Länge von nicht mehr als 2 m, bevorzugt von nicht mehr als 1,5 m,
auf.

Im Falle einer zylindrischen Rundzelle mit dem Formfaktor 21 x 70 weisen die Stromkollektoren bevorzugt
- eine Breite von 56 mm bis 68 mm, bevorzugt von 65 mm, und
- eine Länge von nicht mehr als 3 m, bevorzugt von nicht mehr als 2,5 m,
auf.

### Besonders bevorzugte Ausführungsform der erfindungsgemäßen Zelle:

Im Folgenden wird eine besonders bevorzugte Ausführungsform der erfindungsgemäßen Zelle beschrieben. In dieser besonders bevorzugten Ausführungsform zeichnet sich die Zelle durch die folgende Merkmalskombination aus:
a. Die Zelle umfasst einen Elektroden-Separator-Verbund mit der Sequenz Anode / Separator / Kathode, und
b. der Elektroden-Separator-Verbund liegt in Form eines zylindrischen Wickels mit zwei endständigen Stirnseiten und einem dazwischen liegenden Wickelmantel vor, und
c. die Zelle umfasst ein Gehäuse, das ein metallisches, rohrförmig ausgebildetes Gehäuseteil aus Aluminium oder einer Aluminiumlegierung mit einer endständigen kreisförmigen Öffnung umfasst, und
d. in dem Gehäuse ist der als Wickel ausgebildete Elektroden-Separator-Verbund axial ausgerichtet, so dass der Wickelmantel an der Innenseite des rohrförmig ausgebildeten Gehäuseteils anliegt, und
e. die Anode ist bandförmig ausgebildet und umfasst einen bandförmigen Anodenstromkollektor aus Nickel oder Kupfer oder einer Nickel- oder Kupferlegierung mit einem ersten Längsrand und einem zweiten Längsrand und zwei Endstücken, und
f. der Anodenstromkollektor umfasst einen bandförmigen Hauptbereich, der mit einer Schicht aus negativem Elektrodenmaterial beladen ist, sowie einen freien Randstreifen, der sich entlang des ersten Längsrands erstreckt und der nicht mit dem Elektrodenmaterial beladen ist, und
g. die Kathode ist bandförmig ausgebildet und umfasst einen bandförmigen Kathodenstromkollektor aus Aluminium oder einer Aluminiumlegierung mit einem ersten Längsrand und einem zweiten Längsrand und zwei Endstücken, und
h. der Kathodenstromkollektor umfasst einen bandförmigen Hauptbereich, der mit einer Schicht aus positivem Elektrodenmaterial beladen ist, sowie einen freien Randstreifen, der sich entlang des ersten Längsrands erstreckt und der nicht mit dem Elektrodenmaterial beladen ist, und
i. die Anode und die Kathode sind innerhalb des Elektroden-Separator-Verbunds derart angeordnet, dass der erste Längsrand des Anodenstromkollektors aus einer der endständigen Stirnseiten und der erste Längsrand des Kathodenstromkollektors aus der anderen der endständigen Stirnseiten austritt, und
j. die Zelle umfasst ein Kontaktelement, das die endständige kreisförmige Öffnung des rohrförmig ausgebildeten Gehäuseteils verschließt und das eine Metallscheibe, ein Kontaktblech, einen metallischen Polstift und ein Isoliermittel umfasst, und
k. die Metallscheibe besteht aus Aluminium oder einer Aluminiumlegierung, weist einen kreisförmigen Rand auf und ist derart in dem rohrförmig ausgebildeten Gehäuseteil angeordnet, dass der Rand entlang einer umlaufenden Kontaktzone an der Innenseite des rohrförmig ausgebildeten Gehäuseteils anliegt, wobei der Rand der Metallscheibe mit dem rohrförmig ausgebildeten Gehäuseteil über eine umlaufende Schweißnaht verbunden ist, und
l. das Kontaktblech besteht aus Nickel oder Kupfer oder einer Nickel- oder Kupferlegierung und es weist zwei Seiten auf, von denen eine in Richtung der Metallscheibe weist und die andere in unmittelbarem Kontakt mit einem der ersten Längsränder steht und mit diesem Längsrand durch Verschweißung verbunden ist, und
m. der Polstift ist an dem Kontaktblech fixiert und ist durch eine Durchbrechung in der Metallscheibe aus dem Gehäuse der Zelle herausgeführt, und
n. das Isoliermittel isoliert den Polstift und das Kontaktblech elektrisch gegen die Metallscheibe.

Der Elektroden-Separator-Verbund einschließlich aller seiner Komponenten sowie viele weitere der erwähnten Komponenten wie zum Beispiel das Isoliermittel sowie die Komponenten des Kontaktelements wurden oben bereits näher beschrieben. Auf die entsprechenden Ausführungen wird hiermit Bezug genommen.

Die Metallscheibe des Kontaktelements ist neben dem rohrförmig ausgebildeten Gehäuseteil ein wesentlicher Teil des Gehäuses der erfindungsgemäßen Zelle, sie verschließt die erwähnte kreisförmige Öffnung. Alle wesentlichen Teile des Gehäuses dieser Zelle, das metallische, rohrförmig ausgebildete Gehäuseteil und die Metallscheibe, bestehen aus Aluminium oder einer Aluminiumlegierung. Die beschriebene besonders bevorzugte Ausführungsform der erfindungsgemäßen Zelle ist somit bevorzugt eine Zelle mit einem Aluminiumgehäuse.

Erfindungsgemäß ist der bei einer erfindungsgemäßen Zelle zum Einsatz kommende Polstift ist rohrförmig ausgebildet.

In einer bevorzugten Weiterbildung zeichnet sich die besonders bevorzugte Ausführungsform der erfindungsgemäßen Zelle durch mindestens eines der folgenden Merkmale a. bis d. aus:
a. Der Polstift ist durch Verschweißung an das Kontaktblech fixiert.
b. Der Polstift besteht aus Nickel oder Kupfer oder einer Nickel- oder Kupferlegierung.
c. Der Polstift besteht aus dem gleichen Material wie das Kontaktblech.

Die Merkmale a. bis c. können unabhängig voneinander realisiert sein.

Die rohrförmige Ausbildung des Polstifts ist insoweit von großem Vorteil, als dadurch eine Verschweißung durch den Polstift hindurch möglich ist. Dies ist insbesondere bei dem vorliegend beschriebenen Kontaktplattendesign, bei dem das Kontaktblech zur randständigen Kontaktierung eines Stromkollektorrands verwendet wird, von großem Vorteil. Auf diese Weise kann zunächst das Kontaktblech auf eine Stirnseite des gewickelten Elektrode-Separator-Verbunds geschweißt werden. Der Polstift kann in einem späteren Schritt mit dem Kontaktblech verschweißt werden, selbst wenn der Wickel samt dem Kontaktblech bereits in ein Gehäuse eingeschoben ist. Hierzu unten noch mehr.

In einer bevorzugten Weiterbildung zeichnet sich die besonders bevorzugte Ausführungsform der erfindungsgemäßen Zelle durch mindestens eines der folgenden Merkmale a. bis e. aus:
a. Der Polstift ist rohrförmig ausgebildet und durch Verschweißung an das Kontaktblech fixiert.
b. Der Polstift weist ein endständiges Segment auf, das aus Nickel oder Kupfer oder einer Nickel- oder Kupferlegierung besteht oder das eine Hülle aus Nickel oder Kupfer oder einer Nickel- oder Kupferlegierung aufweist, insbesondere mit dem Nickel oder dem Kupfer oder der Nickel- oder Kupferlegierung beschichtet ist.
c. Das endständige Segment, das aus dem Nickel oder dem Kupfer oder der Nickel- oder Kupferlegierung besteht oder das die Hülle aus dem Nickel oder dem Kupfer oder der Nickel- oder Kupferlegierung aufweist, ist an das Kontaktblech geschweißt.
d. Der Polstift weist ein endständiges Segment auf, das aus Aluminium oder einer Aluminiumlegierung besteht oder das eine Hülle aus Aluminium oder einer Aluminiumlegierung aufweist, insbesondere mit dem Aluminium oder der Aluminiumlegierung beschichtet ist.
e. Das endständige Segment, das aus dem Aluminium oder der Aluminiumlegierung besteht oder das die Hülle aus dem Aluminium oder der Aluminiumlegierung aufweist, bildet einen von außerhalb des Gehäuses abgreifbaren Anschlusskontakt.

Die Merkmalsgruppen a. bis c. auf der einen Seite und d. und e. auf der anderen Seite können grundsätzlich unabhängig voneinander realisiert sein. Bevorzugt sind also die Merkmale a. bis c. sowie d. und e. in Kombination miteinander realisiert. Besonders bevorzugt sind alle Merkmale a. bis e. in Kombination miteinander realisiert.

Diese Ausführungsform bietet den Vorteil, dass eine Verschweißung des Polstifts mit dem Kontaktblech erleichtert ist, da gleiche oder ähnliche Materialien miteinander verschweißt werden können. Wenn das endständige Segment zum Beispiel aus Kupfer besteht, kann es besonders gut an ein Kontaktblech aus Kupfer geschweißt werden. Das Segment aus Aluminium gewährleistet wiederum, dass außerhalb der Zelle eine Kontaktierung, insbesondere Verschweißung, zu einem Aluminiumableiter problemlos möglich ist. Über einen solchen Aluminiumableiter können die Pole mehrerer erfindungsgemäßer Zellen miteinander verbunden werden.

Gegebenenfalls kann das Gehäuse der erfindungsgemäßen Zelle durch den rohrförmigen Polstift mit einem Elektrolyten befüllt werden.

In einer bevorzugten Weiterbildung zeichnet sich die besonders bevorzugte Ausführungsform der erfindungsgemäßen Zelle durch mindestens eines der folgenden Merkmale a. bis c. aus:
a. Der rohrförmige ausgebildete Polstift umfasst an einem seiner Enden einen geschlossenen Boden.
b. Der geschlossene Boden ist Teil des endständigen Segments, das aus dem Nickel oder dem Kupfer oder der Nickel- oder Kupferlegierung besteht oder das die Hülle aus dem Nickel oder dem Kupfer oder der Nickel- oder Kupferlegierung aufweist, und besteht aus dem Nickel oder dem Kupfer oder der Nickel- oder Kupferlegierung oder weist die Hülle aus dem Nickel oder dem Kupfer oder der Nickel- oder Kupferlegierung auf.
c. Der Boden ist an das Kontaktblech geschweißt.

Die Merkmale a. bis c. können unabhängig voneinander realisiert sein. Bevorzugt sind die Merkmale a. bis c. in Kombination miteinander realisiert.

In dieser Ausführungsform ist der Polstift becherförmig ausgebildet, umfasst also besagten Boden sowie eine umlaufende Seitenwand. Eine Verschweißung an das Kontaktblech kann in dieser Ausführungsform auch über einen größeren Bereich erfolgen, beispielsweise über eine Vielzahl über den Boden verteilter Schweißpunkte. Bei der Verwendung des rohrförmigen Polstifts mit offenem Ende kann eine Verschweißung hingegen lediglich dort erfolgen, wo die Öffnung des Polstifts an das Kontaktblech anstößt.

Besonders bevorzugt weist der rohrförmig ausgebildete Polstift die folgenden Dimensionen auf:
- Eine Höhe im Bereich von 1 mm bis 8 mm, bevorzugt im Bereich von 2 mm bis 4 mm.
- Einen Außendurchmesser im Bereich von 2 mm bis 12 mm, bevorzugt im Bereich von 3 mm bis 8 mm.
- Einen Innendurchmesser im Bereich von 1 mm bis 10 mm, bevorzugt im Bereich von 2 mm bis 6 mm.
- Eine Wandstärke im Bereich von 0,3 mm bis 2,5 mm, bevorzugt im Bereich von 0,3 mm bis 1,5 mm.

In Fällen, in denen der Polstift einen Durchmesser aufweist, der seine Höhe übersteigt, weist er in der Ausführungsform mit Boden eine napfförmige Form auf. Man könnte ihn in diesen Fällen auch als Polbecher oder als Polnapf bezeichnen.

In einer bevorzugten Weiterbildung zeichnet sich die besonders bevorzugte Ausführungsform der erfindungsgemäßen Zelle durch mindestens eines der folgenden Merkmale a. und b. aus:
a. Das rohrförmig ausgebildete Gehäuseteil ist Bestandteil eines Gehäusebechers aus Aluminium oder einer Aluminiumlegierung, der einen kreisförmigen Boden umfasst.
b. Der andere der ersten Längsränder liegt unmittelbar an dem Boden an und ist mit dem Boden bevorzugt durch Verschweißung verbunden.

Bevorzugt sind die Merkmale a. und b. in Kombination miteinander realisiert.

Besonders bevorzugt setzt sich das Aluminiumgehäuse der besonders bevorzugten Ausführungsform der erfindungsgemäßen Zelle somit aus zwei wesentlichen Teilen zusammen, dem Gehäusebechers aus Aluminium oder der Aluminiumlegierung und der Metallscheibe aus Aluminium oder der Aluminiumlegierung, wobei der Boden des Gehäusebechers auch zur unmittelbaren Kontaktierung des Längsrands einer der Elektroden dient, analog zu dem Kontaktblech, das mit dem Polstift verschweißt ist.

In einer weiteren bevorzugten Weiterbildung zeichnet sich die besonders bevorzugte Ausführungsform der erfindungsgemäßen Zelle durch mindestens eines der folgenden Merkmale a. bis c. aus:
a. Das rohrförmig ausgebildete Gehäuseteil weist eine weitere endständige kreisförmige Öffnung auf.
b. Die Zelle umfasst ein Verschlusselement aus Aluminium oder einer Aluminiumlegierung mit einem kreisförmigen Rand, das diese weitere endständige Öffnung verschließt und einen Boden des Gehäuses bildet.
c. Das Verschlusselement für die weitere endständige Öffnung ist oder umfasst eine Metallscheibe aus Aluminium oder einer Aluminiumlegierung, deren Rand dem kreisförmigen Rand des metallischen Verschlusselements entspricht oder diesen mitbildet.

Die Merkmale a. bis c. können unabhängig voneinander realisiert sein. Bevorzugt sind die Merkmale a. bis c. in Kombination miteinander realisiert.

Besonders bevorzugt kann sich das Aluminiumgehäuse der besonders bevorzugten Ausführungsform der erfindungsgemäßen Zelle somit auch aus drei wesentlichen Teilen zusammensetzen, dem rohrförmig ausgebildete Gehäuseteil aus Aluminium oder der Aluminiumlegierung, der Metallscheibe aus Aluminium oder der Aluminiumlegierung durch die der Polstift geführt ist und einem Verschlusselement, das eine weitere Metallscheibe aus Aluminium umfasst.

Zur Klarstellung, wenn im Rahmen der vorliegenden Anmeldung von einer Aluminiumlegierung die Rede ist, so ist damit in bevorzugten Ausführungsformen eine Legierung gemeint, die Aluminium in einem Anteil von mehr als 75 Gew.-%, bevorzugt von mehr als 85 Gew.-%, insbesondere von mehr als 95 Gew.-%, besonders bevorzugt von mehr als 98 Gew.-%, umfasst.

Wenn im Rahmen der vorliegenden Anmeldung von einer Kupferlegierung die Rede ist, so ist damit in bevorzugten Ausführungsformen eine Legierung gemeint, die Kupfer in einem Anteil von mehr als 75 Gew.-%, bevorzugt von mehr als 85 Gew.-%, insbesondere von mehr als 95 Gew.-%, besonders bevorzugt von mehr als 98 Gew.-%, umfasst.

Wenn im Rahmen der vorliegenden Anmeldung von einer Nickellegierung die Rede ist, so ist damit in bevorzugten Ausführungsformen eine Legierung gemeint, die Nickel in einem Anteil von mehr als 75 Gew.-%, bevorzugt von mehr als 85 Gew.-%, insbesondere von mehr als 95 Gew.-%, besonders bevorzugt von mehr als 98 Gew.-%, umfasst.

Weitere bevorzugte Weiterbildungen der hier beschriebenen besonders bevorzugten Ausführungsform der erfindungsgemäßen Zelle sind in den Patentansprüchen 5, 8 und 9 definiert.

### Herstellungsverfahren

Eine Variante des erfindungsgemäßen Verfahrens zur Herstellung einer Energiespeicherzelle mit den beschriebenen Merkmalen zeichnet sich durch die folgenden Schritte aus:
a. Bereitstellung eines Elektroden-Separator-Verbunds mit der Sequenz Anode / Separator / Kathode, der in Form eines zylindrischen Wickels mit zwei endständigen Stirnseiten und einem dazwischen liegenden Wickelmantel vorliegt, wobei die Elektroden jeweils einen mit einem Elektrodenmaterial beschichteten Stromkollektor mit einem ersten Längsrand und einem zweiten Längsrand und zwei Endstücken aufweisen und einer der Längsränder aus einer der endständigen Stirnseiten austritt,
b. Bereitstellung eines rohrförmig ausgebildeten Gehäuseteils, das eine endständige kreisförmige Öffnung aufweist,
c. Bereitstellung eines zumindest teilweise metallisch ausgebildeten Kontaktelements, das einen kreisförmigen Rand aufweist,
d. Verschweißen des einen aus der Stirnseite austretenden Längsrands mit dem Kontaktelement oder einer metallischen Komponente des Kontaktelements,
e. Einschieben des Elektroden-Separator-Verbunds mitsamt dem Kontaktelement durch die kreisförmige Öffnung in das rohrförmig ausgebildete Gehäuseteil, so dass der Wickelmantel an der Innenseite des rohrförmig ausgebildeten Gehäuseteils anliegt und der Rand des Kontaktelements entlang einer umlaufenden Kontaktzone an der Innenseite des rohrförmig ausgebildeten Gehäuseteils anliegt, und
f. Fixieren des Randes des Kontaktelements an der Innenseite des rohrförmig ausgebildeten Gehäuseteils.

Die aufgeführten Schritte müssen nicht zwingend in der angegebenen Reihenfolge getätigt werden. So ist es beispielsweise möglich, die Schritte d. und e. in der Reihenfolge zu vertauschen.

Bezüglich bevorzugter Ausgestaltungen des Elektroden-Separator-Verbunds, des rohrförmig ausgebildeten Gehäuseteils und des Kontaktelements sowie des Verschweißens des aus der Stirnseite austretenden Längsrands wird auf die obenstehenden Ausführungen im Zusammenhang mit der erfindungsgemäßen Energiespeicherzelle Bezug genommen.

In einer bevorzugten Ausführungsform zeichnet sich das Verfahren zusätzlich durch mindestens einen der unmittelbar folgenden Schritte aus:
a. Das Fixieren erfolgt mittels Verschweißung, Verlötung oder Verklebung.
b. Nach dem Fixieren wird der Öffnungsrand der endständigen kreisförmigen Öffnung radial nach innen über den Rand des Kontaktelements umgebogen.

In Übereinstimmung mit den obigen Ausführungen zur erfindungsgemäßen Energiespeicherzelle ist das Fixieren mittels Verschweißung besonders bevorzugt. Das Umbiegen des Randes ist in der Regel nicht zum Abdichten oder Schließen erforderlich. Es kann aber beispielsweise geboten sein, um die Höhe der Energiespeicherzelle zu kalibrieren.

Weiterhin zeichnet sich das erfindungsgemäße Verfahren in bevorzugten Ausführungsformen durch mindestens eines der unmittelbar folgenden Merkmale a. und b. aus:
a. Der Elektroden-Separator-Verbund wird mit einem Elektrolyten getränkt, wobei der Elektrolyt durch eine dafür vorgesehene Durchbrechung in dem Kontaktelement oder einem anderen Gehäuseteil eingefüllt wird.
b. Nach dem Einfüllen des Elektrolyten wird die Durchbrechung verschlossen, beispielsweise durch Verklebung oder Verschweißung.
c. Der Verschluss erfolgt unter Verwendung einer Überdrucksicherung.

Besonders bevorzugt sind zumindest die unmittelbar vorstehenden Schritte a. und b., in einigen Ausführungsformen sogar die unmittelbar vorstehenden Schritte a. bis c., in Kombination realisiert.

Zur Realisierung des Merkmals c. kann der Verschluss der Durchbrechung beispielsweise durch Aufschweißen eines Blechs erfolgen, das eine Berstmembran, ein Berstkreuz oder eine ähnliche Sollrissstelle umfasst, die bei einem definierten Überdruck in der Zelle aufreißen kann um eine Explosion der Zelle zu verhindern.

### Besonders bevorzugte Variante des erfindungsgemäßen Verfahrens:

Eine bevorzugte Variante des erfindungsgemäßen Verfahrens, die sich insbesondere zur Herstellung der oben beschriebenen besonders bevorzugten Ausführungsform der erfindungsgemäßen Zelle mit dem Aluminiumgehäuse eignet, zeichnet sich durch eine Kombination der folgenden Schritte aus:
a. Bereitstellung eines Elektroden-Separator-Verbunds mit der Sequenz Anode / Separator / Kathode, der in Form eines zylindrischen Wickels mit zwei endständigen Stirnseiten und einem dazwischen liegenden Wickelmantel vorliegt, wobei die Elektroden jeweils einen mit einem Elektrodenmaterial beschichteten Stromkollektor mit einem ersten Längsrand und einem zweiten Längsrand und zwei Endstücken aufweisen und einer der Längsränder aus einer der endständigen Stirnseiten austritt, und
b. Bereitstellung eines rohrförmig ausgebildeten Gehäuseteils aus Aluminium oder einer Aluminiumlegierung, das eine Innenseite und eine endständige kreisförmige Öffnung aufweist, und
c. Bereitstellung einer Metallscheibe aus Aluminium oder einer Aluminiumlegierung, eines Kontaktblechs aus Nickel oder Kupfer oder einer Nickel- oder Kupferlegierung, eines metallischen Polstifts und eines Isoliermittels, wobei die Metallscheibe, der metallische Polstift und das Isoliermittel in Form einer vormontierten Deckelbaugruppe, bei der der Polstift durch eine Durchbrechung in der Metallscheibe geführt und durch das Isoliermittel elektrisch gegen die Metallscheibe isoliert ist, bereitgestellt werden, und das Kontaktblech separat bereitgestellt wird, und
d. Verschweißen eines der Längsränder mit dem Kontaktblech, und
e. Einschieben des Elektroden-Separator-Verbunds mitsamt dem angeschweißten Kontaktblech durch die kreisförmige Öffnung in das rohrförmig ausgebildete Gehäuseteil, so dass der Wickelmantel an der Innenseite des rohrförmig ausgebildeten Gehäuseteils anliegt, und
f. Anordnen der vormontierten Deckelbaugruppe in dem rohrförmig ausgebildeten Gehäuseteil derart, dass der Rand der Metallscheibe entlang einer umlaufenden Kontaktzone an der Innenseite des rohrförmig ausgebildeten Gehäuseteils anliegt und ein Ende des Polstifts in Kontakt mit dem Kontaktblech steht, und
g. Fixieren des Randes der Metallscheibe an der Innenseite des rohrförmig ausgebildeten Gehäuseteils durch eine umlaufende Verschweißung, und
h. Anschweißen des Polstifts an das Kontaktblech.

Bevor der Rand der Metallscheibe durch die Verschweißung fixiert wird, wird in einigen Ausführungsformen des Verfahrens der Elektroden-Separator-Verbund mit einem Elektrolyten befüllt. Allerdings ist dies auch noch nachgeschaltet möglich, beispielsweise durch ein Loch in der Metallscheibe, welches anschließend verschlossen wird.

Durch die umlaufende Verschweißung wird der Rand der Metallscheibe über seine gesamte Länge an der Innenseite des rohrförmig ausgebildeten Gehäuseteils fixiert. Ziel ist eine flüssigkeitsdichte Verbindung zwischen den beiden Gehäuseteilen.

Auch hier sei darauf verwiesen, dass der Elektroden-Separator-Verbund einschließlich aller seiner Komponenten sowie viele weitere der erwähnten Komponenten der Zelle wie zum Beispiel das Isoliermittel sowie die Metallscheibe oder das Kontaktblech oben bereits näher beschrieben wurden. Auf die entsprechenden Ausführungen wird auch hier Bezug genommen.

In einer Weiterbildung der besonders bevorzugten Variante des erfindungsgemäßen Verfahrens zeichnet sich das Verfahren durch mindestens einen der folgenden Schritte a. bis c. aus:
a. Der Elektroden-Separator-Verbund wird mit einem Elektrolyten getränkt, wobei der Elektrolyt durch eine dafür vorgesehene Durchbrechung in der Metallscheibe oder einem anderen Gehäuseteil eingefüllt wird.
b. Nach dem Einfüllen des Elektrolyten wird die Durchbrechung (114) verschlossen, beispielsweise durch Verklebung oder Verschweißung oder Verlötung.
c. Der Verschluss erfolgt unter Verwendung einer Überdrucksicherung (120).

Wie oben bereits erwähnt, kann der Elektrolyt gegebenenfalls auch über den Polstift eingefüllt werden. Bei der Überdrucksicherung kann es sich, ebenfalls wie bereits erwähnt, beispielsweise um eine Berstmembran oder ein Berstkreuz handeln.

Eine weitere Weiterbildung des hier beschriebenen Verfahrens ist im Patentanspruch 11 definiert.

### KURZBESCHREIBUNG DER ZEICHNUNGEN

Weitere Merkmale und Vorteile der Erfindung ergeben sich aus den Ansprüchen und aus der nachfolgenden Beschreibung von bevorzugten Ausführungsbeispielen der Erfindung in Verbindung mit den Zeichnungen. Die einzelnen Merkmale können dabei jeweils für sich oder in Kombination miteinander verwirklicht sein.

In den Zeichnungen zeigen schematisch
- Fig. 1 verschiedene Ausführungsformen eines Kontaktelements einer erfindungsgemäßen Energiespeicherzelle (Querschnittsdarstellungen),
- Fig. 2 eine Teildarstellung einer erfindungsgemäßen Energiespeicherzelle gemäß der oben beschriebenen ersten bevorzugten Erfindungsvariante (Querschnittsdarstellung),
- Fig. 3 eine Teildarstellung einer erfindungsgemäßen Energiespeicherzelle gemäß der oben beschriebenen zweiten bevorzugten Erfindungsvariante (Querschnittsdarstellung),
- Fig. 4 eine Teildarstellung einer erfindungsgemäßen Energiespeicherzelle gemäß der oben beschriebenen dritten bevorzugten Erfindungsvariante (Querschnittsdarstellung),
- Fig. 5 eine weitere Teildarstellung einer erfindungsgemäßen Energiespeicherzelle gemäß der oben beschriebenen dritten bevorzugten Erfindungsvariante (Querschnittsdarstellung),
- Fig. 6 eine Illustration von Schweißverbindungen zur Anbindung eines Längsrandes eines Stromkollektors an ein Kontaktblech einer erfindungsgemäßen Energiespeicherzelle (Draufsicht von oben),
- Fig. 7 eine weitere bevorzugte Ausführungsform einer erfindungsgemäßen Energiespeicherzelle gemäß der oben beschriebenen dritten bevorzugten Erfindungsvariante (Querschnittsdarstellung),
- Fig. 8 eine Ausführungsform einer vormontierten Deckelbaugruppe sowie eines Kontaktelements, die bzw. das zum Verschluss eines Gehäuses einer Zelle gemäß Fig. 4, Fig. 5 und Fig. 7 eingesetzt werden kann, und
- Fig. 9 eine Ausführungsform eines Polstifts, der im Rahmen der Erfindung bevorzugt zum Einsatz kommt.

In Fig. 1 finden sich Querschnittsdarstellungen verschiedener Ausführungsformen A bis H von Kontaktelementen 110, sie sich zum Verschließen erfindungsgemäßer Energiespeicherzellen 100 eignen. Im Einzelnen:
A Hier ist die einfachste Ausführungsform eines Kontaktelements 110 gemäß der Erfindung dargestellt, nämlich eine flache Metallscheibe mit kreisrundem kreisförmigem Umfang, welche sich nur in einer Ebene erstreckt. Die Metallscheibe kann beispielsweise aus Aluminium bestehen.
B Das hier dargestellte Kontaktelement 110 umfasst die Metallscheibe 111 und den metallischen Poldeckel 112. Die Metallscheibe 111 und der Poldeckel 112 weisen jeweils einen kreisförmigen Umfang und einen identischen Durchmesser auf. Während sich die Metallscheibe 111 nur in einer Ebene erstreckt, weist der Poldeckel 112 eine zentrale Wölbung auf. Die beiden Teile 111 und 112 des Kontaktelements 110 sind bevorzugt durch eine Verschweißung (nicht dargestellt) miteinander verbunden.
C Das hier dargestellte Kontaktelement 110 umfasst die Metallscheibe 111 und den metallischen Poldeckel 112. Der Poldeckel 112 ist analog zu dem Poldeckel in B ausgebildet. Allerdings ist der Rand 111a der Metallscheibe 111 hier radial nach innen umgebogen, so dass die Metallscheibe 111 im Randbereich einen U-förmigen Querschnitt aufweist. Der umgebogene Rand 111a umschließt den Rand 112a des Poldeckels 112 und fixiert so den Poldeckel 112 auf der Metallscheibe 111. Ungeachtet dessen ist es bevorzugt, wenn die Metallscheibe 111 und der Poldeckel 112 zusätzlich miteinander verschweißt sind.
D Das hier dargestellte Kontaktelement 110 umfasst die Metallscheibe 111 und das metallische Kontaktblech 113. Das Kontaktblech 113 liegt flach an der Metallscheibe 111 an und ist mit dieser vorzugsweise verschweißt. Die Metallscheibe 111 kann beispielsweise aus Edelstahl bestehen, das Kontaktblech 113 beispielsweise aus einer Aluminiumlegierung.
E Das hier dargestellte Kontaktelement 110 umfasst lediglich eine Metallscheibe. Diese weist im Unterschied zu der in A dargestellten Metallscheibe auf ihrer Oberseite eine kreisförmige Vertiefung 111b sowie auf ihrer Unterseite eine dazu korrespondierende Erhöhung auf, ist also profiliert.
F Das hier dargestellte Kontaktelement 110 umfasst lediglich eine Metallscheibe. Diese weist im Unterschied zu der in A dargestellten Metallscheibe einen radial nach innen umgeschlagenen Rand 111a und in der Folge einen doppellagigen Randbereich auf.
G Das hier dargestellte Kontaktelement 110 umfasst die Metallscheibe 111 und den metallischen Poldeckel 112, der eine zentrale Wölbung aufweist. Der Rand 111a der Metallscheibe 111 ist radial nach innen umgebogen, so dass die Metallscheibe 111 im Randbereich einen U-förmigen Querschnitt aufweist. Der umgebogene Rand 111a umschließt den Rand 112a des Poldeckels 112 und fixiert so den Poldeckel 112 auf der Metallscheibe 111. Bevorzugt sind die Ränder 111a und 112a der Metallscheibe 111 und des Poldeckels 112 zusätzlich durch eine umlaufende Verschweißung (nicht dargestellt) miteinander verbunden. Im Zentrum der Metallscheibe 111 findet sich das Loch 114, durch das ein Hohlraum 116 zugänglich ist, der von der Metallscheibe 111 und dem Poldeckel 112 eingeschlossen ist. In den Poldeckel 112 ist eine Überdrucksicherung 120 integriert, die bei einem Überdruck im Hohlraum 116 auslösen kann. Bei der Überdrucksicherung 120 kann es sich im einfachsten Fall um eine Sollrissstelle handeln.
H Das hier dargestellte Kontaktelement umfasst lediglich eine Metallscheibe 111. Diese weist einen um 90° umgebogenen Rand 111a mit L-förmigem Querschnitt auf.

Verschlusselemente gemäß der vorliegenden Erfindung, die im Rahmen der oben beschriebenen Gehäusevariante mit zwei Deckeln zum Einsatz kommen können, können bevorzugt ebenso gemäß den Ausführungsformen A bis H ausgestaltet sein.

Die in **Fig. 2** dargestellte Energiespeicherzelle 100 ist ein Beispiel für die oben beschriebene erste bevorzugte Erfindungsvariante. Sie umfasst das in Fig. 1B dargestellte Kontaktelement 110, dessen Rand 110a von den Rändern 111a und 112a der Metallscheibe 111 und des metallischen Poldeckels 112 gebildet wird. Das Kontaktelement 110 bildet gemeinsam mit dem hohlzylindrisch ausgebildeten, metallischen Gehäuseteil 101 das Gehäuse der Energiespeicherzelle 100 und verschließt eine endständige Öffnung des Gehäuseteils 101. Der Rand 110a des Kontaktelements liegt entlang einer umlaufenden Kontaktzone an der Innenseite 101b des rohrförmig ausgebildeten Gehäuseteils 101 an und ist mit dem rohrförmig ausgebildeten Gehäuseteil 101 über eine umlaufende Schweißnaht verbunden. Der Rand 101a des Gehäuseteils 101 ist radial nach innen über den Rand 110a des Kontaktelements 110 umgebogen.

In dem Gehäuse ist der spiralförmig gewickelte Elektroden-Separator-Verbund 104 axial ausgerichtet, so dass sein Wickelmantel 104a an der Innenseite des rohrförmig ausgebildeten Gehäuseteils 101 anliegt. Aus der obenliegenden Stirnseite 104b des als Wickel ausgebildeten Elektroden-Separator-Verbunds 104 tritt die Längsrand 115a des Anodenstromkollektors aus. Dieser ist beispielsweise über eine Multi-Pin-Verbindung unmittelbar an die Unterseite der Metallscheibe 111 geschweißt.

Die in **Fig**. **3** dargestellte Energiespeicherzelle 100 ist ein Beispiel für die oben beschriebene zweite bevorzugte Erfindungsvariante. Sie umfasst das in Fig. 1B dargestellte Kontaktelement 110, dessen Rand 110a von den Rändern 111a und 112a der Metallscheibe 111 und des Poldeckels 112 gebildet wird. Das Kontaktelement 110 bildet gemeinsam mit dem hohlzylindrisch ausgebildeten, metallischen Gehäuseteil 101 das Gehäuse der Energiespeicherzelle 100 und verschließt eine endständige Öffnung des Gehäuseteils 101. Der Rand 110a des Kontaktelements liegt entlang einer umlaufenden Kontaktzone an der Innenseite 101b des rohrförmig ausgebildeten Gehäuseteils 101 an und ist mit dem rohrförmig ausgebildeten Gehäuseteil 101 über eine umlaufende Schweißnaht verbunden. Der Rand 101a des Gehäuseteils 101 ist radial nach innen über den Rand 110a des Kontaktelements 110 umgebogen.

Das Kontaktelement 110 umfasst weiterhin ein metallisches Kontaktblech 113 mit zwei Seiten, von denen eine in Richtung der Metallscheibe 111 weist, sogar flach an ihr anliegt, und durch Verschweißung mit der Metallscheibe 111 verbunden ist.

In dem Gehäuse ist der spiralförmig gewickelte Elektroden-Separator-Verbund 104 axial ausgerichtet, so dass sein Wickelmantel 104a an der Innenseite des rohrförmig ausgebildeten, metallischen Gehäuseteils 101 anliegt. Aus der obenliegenden Stirnseite 104b des als Wickel ausgebildeten Elektroden-Separator-Verbunds 104 tritt die Längsrand 115a des Anodenstromkollektors aus. Dieser liegt unmittelbar an der Unterseite des Kontaktblechs 113 an und ist beispielsweise über eine Multi-Pin-Verbindung mit der Unterseite des Kontaktblechs 113 verschweißt.

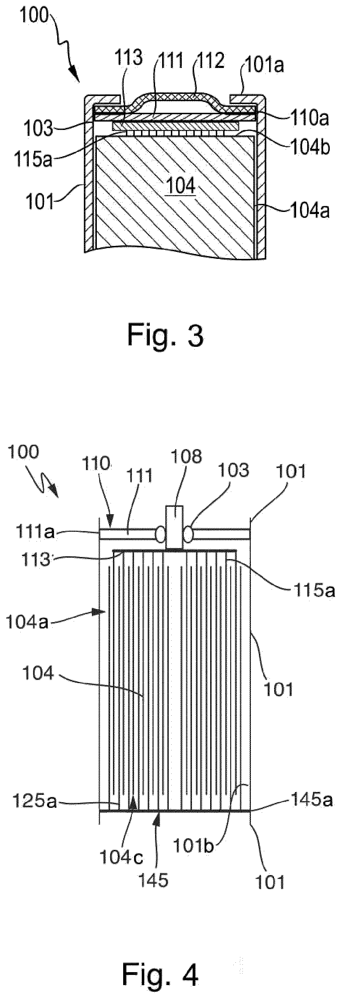

Die in **Fig. 4** dargestellte Energiespeicherzelle 100 ist ein Beispiel für die oben beschriebene dritte bevorzugte Erfindungsvariante. Sie umfasst den Elektroden-Separator-Verbund 104, der axial in das hohlzylindrisch ausgebildete Gehäuseteil 101 eingeschoben ist, so dass sein Wickelmantel 104a an der Innenseite 101b des rohrförmig ausgebildeten Gehäuseteils 101 anliegt. Der Elektroden-Separator-Verbund 104 umfasst eine bandförmige Anode und eine bandförmige Kathode, die spiralförmig aufgewickelt sind. Die Anode umfasst einen bandförmigen Anodenstromkollektor und einen bandförmigen Kathodenstromkollektor. Der Anodenstromkollektor ist mit einer Schicht aus negativem Elektrodenmaterial beladen. Der Kathodenstromkollektor ist mit einer Schicht aus positivem Elektrodenmaterial beladen.

Aus der obenliegenden Stirnseite 104b des als Wickel ausgebildeten Elektroden-Separator-Verbunds 104 tritt der Längsrand 115a des Anodenstromkollektors aus. Aus der untenliegenden Stirnseite 104c des als Wickel ausgebildeten Elektroden-Separator-Verbunds 104 tritt der Längsrand 125a des Kathodenstromkollektors aus.

Die Energiespeicherzelle 100 umfasst das rohrförmig und hohlzylindrisch ausgebildete, metallische Gehäuseteil 101, das zwei endständige Öffnungen aufweist. Die obenliegende Öffnung ist durch die Metallscheibe 111 verschlossen, die derart in dem rohrförmig ausgebildeten Gehäuseteil 101 angeordnet ist, dass ihr Rand 111a entlang einer umlaufenden Kontaktzone an der Innenseite 101b des rohrförmig ausgebildeten Gehäuseteils 101 anliegt. Der Rand 111a der Metallscheibe 111 ist mit dem rohrförmig ausgebildeten Gehäuseteil 101 über eine umlaufende Schweißnaht verbunden.

Die Metallscheibe 111 ist Bestandteil eines Kontaktelements **110,** das neben der Metallscheibe 111 das metallische Kontaktblech 113 und den Polstift 108 umfasst. Das metallische Kontaktblech 113 umfasst zwei Seiten, von denen eine, im Bild die obenliegende, in Richtung der Metallscheibe 111 weist. An der anderen Seite des Kontaktblechs 113, hier der untenliegenden Seite, liegt der Längsrand 115a unmittelbar an. Der Längsrand 115a ist mit dem Kontaktblech 113 durch Verschweißung verbunden. Der Polstift 108 ist an das Kontaktblech 113 geschweißt und durch eine zentrale Durchbrechung in der Metallscheibe 111 aus dem Gehäuse der Zelle 100 herausgeführt.

Das Kontaktelement 110 umfasst weiterhin das Isoliermittel 103, das den Polstift 108 und somit auch das mit dem Polstift verschweißte Kontaktblech 113 gegen die Metallscheibe 111 elektrisch isoliert.

Die untenliegende Öffnung des Gehäuseteils 101 ist mit dem Verschlusselement 145 verschlossen. Bei dem Verschlusselement 145 handelt es sich um eine Metallscheibe, deren Rand 145a entlang einer umlaufenden Kontaktzone an der Innenseite 101b des rohrförmig ausgebildeten Gehäuseteils 101 anliegt. Der Rand 145a des Verschlusselements 145 ist mit dem rohrförmig ausgebildeten Gehäuseteil 101 über eine umlaufende Schweißnaht verbunden.

An der innenliegenden (oberen) Seite des Kontaktblechs 113 liegt der Längsrand 125a des Kathodenstromkollektors unmittelbar an. Der Längsrand 125a ist mit dem Kontaktblech 113 durch Verschweißung verbunden. Die Verschweißung kann beispielsweise mittels eines Laser durch die Metallscheibe des Verschlusselements 145 hindurch bewirkt werden.

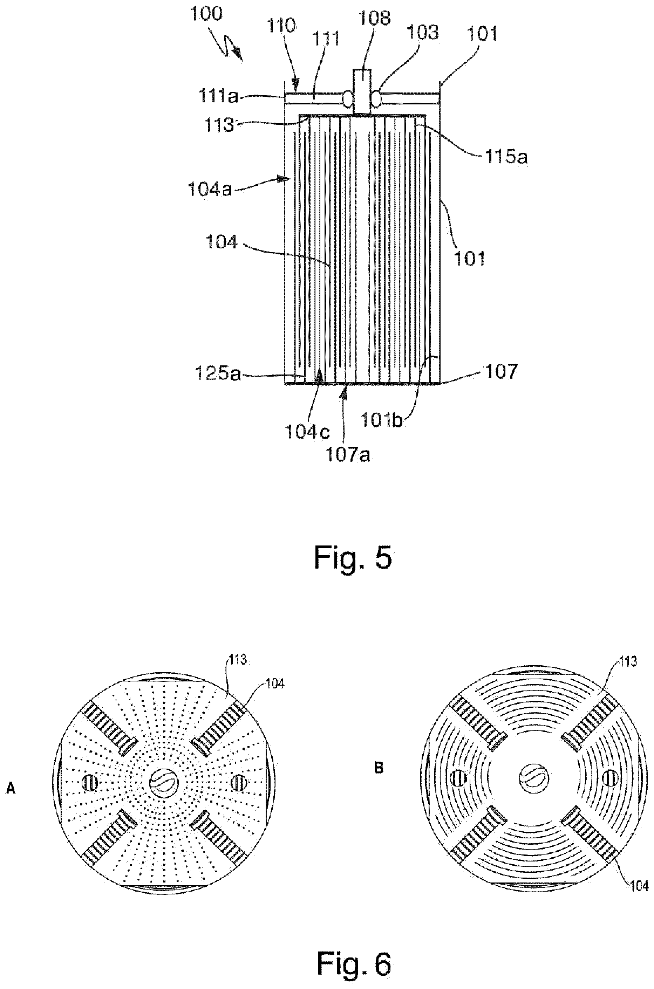

Die in **Fig. 5** dargestellte Energiespeicherzelle 100 ist ein weiteres Beispiel für die oben beschriebene dritte bevorzugte Erfindungsvariante. Sie umfasst den Elektroden-Separator-Verbund 104, der axial in das hohlzylindrisch ausgebildete Gehäuseteil 101 eingeschoben ist, so dass sein Wickelmantel 104a an der Innenseite 101b des rohrförmig ausgebildeten Gehäuseteils 101 anliegt. Der Elektroden-Separator-Verbund 104 umfasst eine bandförmige Anode und eine bandförmige Kathode, die spiralförmig aufgewickelt sind. Die Anode umfasst einen bandförmigen Anodenstromkollektor und einen bandförmigen Kathodenstromkollektor. Der Anodenstromkollektor ist mit einer Schicht aus negativem Elektrodenmaterial beladen. Der Kathodenstromkollektor ist mit einer Schicht aus positivem Elektrodenmaterial beladen.

Aus der obenliegenden Stirnseite 104b des als Wickel ausgebildeten Elektroden-Separator-Verbunds 104 tritt der Längsrand 115a des Anodenstromkollektors aus. Aus der untenliegenden Stirnseite 104c des als Wickel ausgebildeten Elektroden-Separator-Verbunds 104 tritt der Längsrand 125a des Kathodenstromkollektors aus.

Die Energiespeicherzelle 100 umfasst das rohrförmig und hohlzylindrisch ausgebildete, metallische Gehäuseteil 101. Das rohrförmig ausgebildete Gehäuseteil 101 ist Bestandteil eines metallischen Gehäusebechers 107, der einen kreisförmigen Boden 107a umfasst. Die obenliegende Öffnung des Gehäusebechers 107 ist durch die Metallscheibe 111 verschlossen, die derart in dem rohrförmig ausgebildeten Gehäuseteil 101 angeordnet ist, dass ihr Rand 111a entlang einer umlaufenden Kontaktzone an der Innenseite 101b des rohrförmig ausgebildeten Gehäuseteils 101 anliegt. Der Rand 111a der Metallscheibe 111 ist mit dem rohrförmig ausgebildeten Gehäuseteil 101 über eine umlaufende Schweißnaht verbunden.

Die Metallscheibe 111 ist Bestandteil eines Kontaktelements 110, das neben der Metallscheibe 111 das metallische Kontaktblech 113 und den Polstift 108 umfasst. Das metallische Kontaktblech 113 umfasst zwei Seiten, von denen eine, im Bild die obenliegende, in Richtung der Metallscheibe 111 weist. An der anderen Seite des Kontaktblechs 113, hier der untenliegenden Seite, liegt der Längsrand 115a unmittelbar an. Der Längsrand 115a ist mit dem Kontaktblech 113 durch Verschweißung verbunden. Der Polstift 108 ist an das Kontaktblech 113 geschweißt und durch eine zentrale Durchbrechung in der Metallscheibe 111 aus dem Gehäuse der Zelle 100 herausgeführt.

Das Kontaktelement 110 umfasst weiterhin das Isoliermittel 103, das den Polstift 108 und somit auch das mit dem Polstift verschweißte Kontaktblech 113 gegen die Metallscheibe 111 elektrisch isoliert.

Das untere Ende des Gehäusebechers 107 schließt mit dem kreisförmigen Boden 107a ab. An der innenliegenden Seite des Bodens 107a liegt der Längsrand 125a des Kathodenstromkollektors unmittelbar an. Der Längsrand 125a ist mit dem Boden 107a durch Verschweißung verbunden. Die Verschweißung kann beispielsweise mittels eines Laser durch den Boden 107a hindurch bewirkt werden.

Die in **Fig. 6** dargestellten Ausführungsbeispiele illustrieren Kontaktierungsvarianten zur Anbindung der Längsränder von Stromkollektoren mit spiralförmiger Struktur an ein Kontaktblech. Im Einzelnen:
A Hier ist liegt ein Längsrand eines Stromkollektors unmittelbar an einem Kontaktblech an und ist über eine Vielzahl von punktförmigen Schweißverbindungen mit dem Kontaktblech verbunden (sogenannte Multi-Pin-Verbindung).
B Hier ist ein Längsrand eines unmittelbar an einem Kontaktblech anliegenden Stromkollektors über eine Mehrzahl von Abschnitten, die jeweils über ihre gesamte Länge über eine Schweißnaht durchgehend mit dem Kontaktblech verbunden sind, an das Kontaktblech fixiert.

Die in **Fig. 7** dargestellte Energiespeicherzelle 100 umfasst ein hohlzylindrisch ausgebildetes Gehäuseteil 101, das Bestandteil des Gehäusebechers 107 ist, der den kreisförmigen Boden 107a sowie eine kreisförmige Öffnung (definiert durch den Rand 101a) umfasst. Bei dem Gehäusebecher 107 handelt es sich um ein Tiefziehteil. Der Gehäusebecher 107 schließt gemeinsam mit dem Kontaktelement 110, das die flache Metallscheibe 111 mit dem kreisförmigem Rand 111a umfasst, einen Innenraum 137 ein, in dem der als Wickel ausgebildete Elektroden-Separator-Verbund 104 axial ausgerichtet ist. Die Metallscheibe 111 ist derart in dem rohrförmig ausgebildeten Gehäuseteil 101 angeordnet, dass ihr Rand 111a entlang einer umlaufenden Kontaktzone an der Innenseite 101b des rohrförmig ausgebildeten Gehäuseteils 101 anliegt. Ihr Rand 111a entsprecht dem Rand des Kontaktelements und ist mit dem rohrförmig ausgebildeten Gehäuseteil 101 über eine umlaufende Schweißnaht verbunden. Der Rand 101a des rohrförmig ausgebildeten Gehäuseteils 101 ist radial (hier um ca. 90 °) nach innen über den Rand 110a des Kontaktelements 110 umgebogen.

Der Elektroden-Separator-Verbund 104 liegt in Form eines zylindrischen Wickels mit zwei endständigen Stirnseiten vor, zwischen denen sich der umlaufende Wickelmantel erstreckt, der an der Innenseite des hohlzylindrisch ausgebildeten Gehäuseteils 101 anliegt. Er ist aus einer positiven Elektrode und einer negativen Elektrode sowie den Separatoren 118 und 119 gebildet, die jeweils bandförmig ausgebildet und spiralförmig gewickelt sind. Die zwei Stirnseiten des Elektroden-Separator-Verbunds 104 werden durch die Längsränder der Separatoren 118 und 119 gebildet. Aus diesen Stirnseiten ragen die Stromkollektoren 115 und 125 hervor. Die entsprechenden Überstände sind mit d1 und d2 bezeichnet.

Aus der oberen Stirnseite des Elektroden-Separator-Verbunds 104 tritt der Anodenstromkollektor 115 aus, aus der unteren Stirnseite der Kathodenstromkollektor 125. Der Anodenstromkollektor 115 ist in einem bandförmigen Hauptbereich mit einer Schicht aus einem negativen Elektrodenmaterial 155 beladen. Der Kathodenstromkollektor 125 ist in einem bandförmigen Hauptbereich mit einer Schicht aus einem positiven Elektrodenmaterial 123 beladen. Der Anodenstromkollektor 115 weist einen Randstreifen 117 auf, der sich entlang seines Längsrands 115a erstreckt und der nicht mit dem Elektrodenmaterial 155 beladen ist. Stattdessen ist hier eine Beschichtung 165 aus einem keramischen Stützmaterial aufgebracht, die den Stromkollektor in diesem Bereich stabilisiert. Der Kathodenstromkollektor 125 weist einen Randstreifen 121 auf, der sich entlang seines Längsrands 125a erstreckt und der nicht mit dem Elektrodenmaterial 123 beladen ist. Stattdessen ist auch hier die Beschichtung 165 aus dem keramischen Stützmaterial aufgebracht.

Neben der Metallscheibe 111 umfasst das Kontaktelement 110 weiterhin das Kontaktblech 113 und den Polstift 108. Das metallische Kontaktblech 113 umfasst zwei Seiten, von denen eine, im Bild die obenliegende, in Richtung der Metallscheibe 111 weist. An der anderen Seite des Kontaktblechs 113, hier der untenliegenden Seite, steht der Längsrand 115a über seine gesamte Länge in unmittelbarem Kontakt mit dem Kontaktblech 113 und damit mit dem Kontaktelement 110 und ist mit diesem mindestens über mehrere Abschnitte, bevorzugt über seine gesamte Länge, durch Verschweißung verbunden. Alternativ kann hier die oben beschriebene Multi-Pin-Verbindung vorliegen. Das Kontaktelement 110 dient somit gleichzeitig zur elektrischen Kontaktierung der Anode und als Gehäuseteil.

Der Polstift 108 ist an das Kontaktblech 113 geschweißt und durch eine zentrale Durchbrechung in der Metallscheibe 111 aus dem Gehäuse der Zelle 100 herausgeführt. Das Kontaktelement 110 umfasst weiterhin das Isoliermittel 103, das den Polstift 108 und somit auch das mit dem Polstift verschweißte Kontaktblech 113 gegen die Metallscheibe 111 elektrisch isoliert. Lediglich die Metallscheibe 111 steht in unmittelbarem und damit auch in elektrischem Kontakt mit dem Gehäusebecher 107. Der Polstift 108 und das Kontaktblech 113 sind gegen den Gehäusebecher isoliert.

Der Rand 125a des Kathodenstromkollektors 125 steht über seine gesamte Länge in unmittelbarem Kontakt mit dem Boden 107a und ist mit diesem mindestens über mehrere Abschnitte, bevorzugt über seine gesamte Länge, durch Verschweißung (insbesondere mit Hilfe eines Lasers) verbunden. Alternativ kann auch hier die oben beschriebene Multi-Pin-Verbindung vorliegen. Der Boden 107a dient somit nicht nur als Teil des Gehäuses sondern auch zur elektrischen Kontaktierung der Kathode.

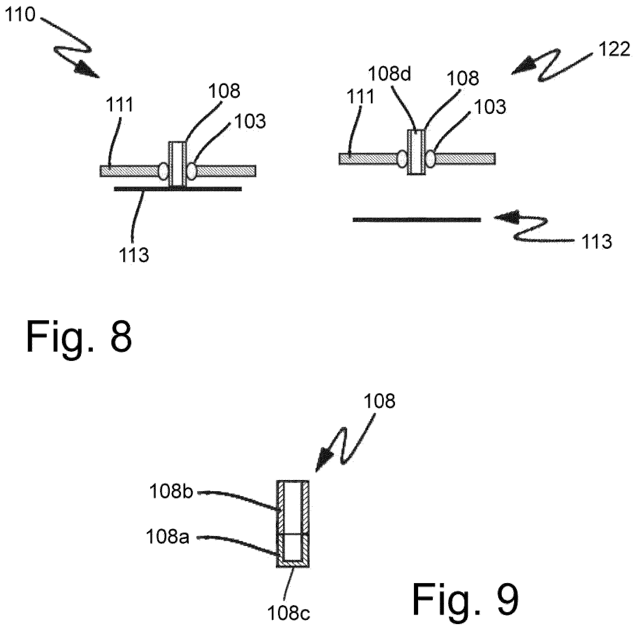

In Fig. 8 ist ein Kontaktelement 110 dargestellt, wie es zum Verschluss eines Gehäuses einer Zelle gemäß Fig. 4, Fig. 5 und Fig. 7 eingesetzt wird. Das Kontaktelement umfasst die Metallscheibe 111, das Kontaktblech 113, den metallischen Polstift 108 und das Isoliermittel 103. Zur Montage der Zellen gemäß den Figuren 4, 5 und 7 wird bevorzugt das separat bereitgestellte Kontaktblech 113 mit dem Längsrand 115a verschweißt. Nach dem Einschieben des Elektroden-Separator-Verbunds 104 mitsamt dem angeschweißten Kontaktblech 113 in das Gehäuseteil 101 wird die vormontierte Deckelbaugruppe 122 in dem Gehäuseteil 101 angeordnet, so dass der Rand der Metallscheibe 111 entlang einer umlaufenden Kontaktzone an der Innenseite des Gehäuseteils 101 anliegt und ein Ende des Polstifts 108 in Kontakt mit dem Kontaktblech 113 steht. Anschließend können der Rand der Metallscheibe 111 an die Innenseite des Gehäuseteils 101 und der Polstift 108 an das Kontaktblech 113 geschweißt werden. Das Anschweißen des Polstifts 108 ist dadurch erleichtert, dass er rohrförmig ausgebildet ist. Der Polstift 108 weist zu diesem Zeck eine zentrale Durchbrechung 108d auf.

In Fig. 9 ist eine bevorzugte Ausführungsform eines Polstifts 108 dargestellt. Der Polstift 108 ist rohrförmig ausgebildet und weist ein endständiges Segment 108a auf, das aus Nickel oder Kupfer oder einer Nickel- oder Kupferlegierung besteht oder das eine Hülle aus Nickel oder Kupfer oder einer Nickel- oder Kupferlegierung aufweist, beispielsweise mit dem Nickel oder dem Kupfer oder der Nickel- oder Kupferlegierung beschichtet ist. Ein weiteres endständiges Segment 108b des Polstifts 108 besteht aus Aluminium oder einer Aluminiumlegierung oder weist eine Hülle aus Aluminium oder einer Aluminiumlegierung auf, ist also beispielsweise mit dem Aluminium oder der Aluminiumlegierung beschichtet. Das Segment 108a kann hervorragend mit dem Kontaktblech 113 verschweißt werden, insbesondere wenn dieses aus dem gleichen Material besteht wie das Segment 108a. Das endständige Segment 108b bildet in der fertig montierten Zelle einen von außerhalb des Gehäuses abgreifbaren Anschlusskontakt. Insbesondere kann das endständige Segment 108b gut mit einem Ableiter aus Aluminium oder einer Aluminiumlegierung verschweißt werden.

Im Unterscheid zu dem in Fig. 8 dargestellten Polstift umfasst der in Figur 9 dargestellte Polstift 108 einen geschlossenen Boden 108c. Dieser ist Teil des endständigen Segments 108a und besteht ebenso aus Nickel oder Kupfer oder der Nickel- oder Kupferlegierung oder weist besagte Hülle aus Nickel oder dem oder der Nickel- oder Kupferlegierung auf. Der Boden 108c kann besonders einfach an das Kontaktblech 113 geschweißt werden.

## Patentansprüche

1. Lithium-Ionen-Zelle (100) mit den Merkmalen
a. die Zelle umfasst einen Elektroden-Separator-Verbund (104) mit der Sequenz Anode / Separator / Kathode,
b. der Elektroden-Separator-Verbund (104) liegt in Form eines zylindrischen Wickels mit zwei endständigen Stirnseiten (104b, 104c) und einem dazwischen liegenden Wickelmantel (104a) vor,
c. die Zelle umfasst ein Gehäuse, das ein metallisches, rohrförmig ausgebildetes Gehäuseteil (101) aus Aluminium oder einer Aluminiumlegierung mit einer endständigen kreisförmigen Öffnung (101c) umfasst,
d. in dem Gehäuse ist der als Wickel ausgebildete Elektroden-Separator-Verbund (104) axial ausgerichtet, so dass der Wickelmantel (104a) an der Innenseite (101b) des rohrförmig ausgebildeten Gehäuseteils (101) anliegt,
e. die Anode ist bandförmig ausgebildet und umfasst einen bandförmigen Anodenstromkollektor (115) aus Nickel oder Kupfer oder einer Nickel- oder Kupferlegierung mit einem ersten Längsrand (115a) und einem zweiten Längsrand und zwei Endstücken,
f. der Anodenstromkollektor (115) umfasst einen bandförmigen Hauptbereich, der mit einer Schicht aus negativem Elektrodenmaterial (155) beladen ist, sowie einen freien Randstreifen (117), der sich entlang des ersten Längsrands (115a) erstreckt und der nicht mit dem Elektrodenmaterial (155) beladen ist,
g. die Kathode ist bandförmig ausgebildet und umfasst einen bandförmigen Kathodenstromkollektor (125) aus Aluminium oder einer Aluminiumlegierung mit einem ersten Längsrand (125a) und einem zweiten Längsrand und zwei Endstücken,
h. der Kathodenstromkollektor (125) umfasst einen bandförmigen Hauptbereich, der mit einer Schicht aus positivem Elektrodenmaterial (123) beladen ist, sowie einen freien Randstreifen (121), der sich entlang des ersten Längsrands (125a) erstreckt und der nicht mit dem Elektrodenmaterial (123) beladen ist,
i. die Anode und die Kathode sind innerhalb des Elektroden-Separator-Verbunds (104) derart angeordnet, dass der erste Längsrand (115a) des Anodenstromkollektors (115) aus einer der endständigen Stirnseiten (104b, 104c) und der erste Längsrand (125a) des Kathodenstromkollektors (125) aus der anderen der endständigen Stirnseiten (104b, 104c) austritt,
j. die Zelle umfasst ein Kontaktelement (110), das die endständige kreisförmige Öffnung (101c) des rohrförmig ausgebildeten Gehäuseteils (101) verschließt und das eine Metallscheibe (111), ein Kontaktblech (113), einen rohrförmig ausgebildeten metallischen Polstift (108) und ein Isoliermittel (103) umfasst,
k. die Metallscheibe (111) besteht aus Aluminium oder einer Aluminiumlegierung, weist einen kreisförmigen Rand (111a) auf und ist derart in dem rohrförmig ausgebildeten Gehäuseteil (101) angeordnet, dass der Rand (111a) entlang einer umlaufenden Kontaktzone an der Innenseite (101b) des rohrförmig ausgebildeten Gehäuseteils (101) anliegt, wobei der Rand (111a) der Metallscheibe (111) mit dem rohrförmig ausgebildeten Gehäuseteil (101) über eine umlaufende Schweißnaht verbunden ist,
l. das Kontaktblech (113) besteht aus Nickel oder Kupfer oder einer Nickel- oder Kupferlegierung und es weist zwei Seiten auf, von denen eine in Richtung der Metallscheibe (111) weist und die andere in unmittelbarem Kontakt mit einem der ersten Längsränder (115a, 125a) steht und mit diesem Längsrand durch Verschweißung verbunden ist,
m. der rohrförmig ausgebildete Polstift (108) ist an dem Kontaktblech (113) fixiert und ist durch eine Durchbrechung in der Metallscheibe (111) aus dem Gehäuse der Zelle herausgeführt, und
n. das Isoliermittel (103) isoliert den rohrförmig ausgebildeten Polstift (108) und das Kontaktblech (113) elektrisch gegen die Metallscheibe (111).

2. Zelle nach Anspruch 1 mit mindestens einem der folgenden zusätzlichen Merkmale:
a. Der Polstift (108) ist durch Verschweißung an das Kontaktblech (113) fixiert.
b. Der Polstift (108) besteht aus Nickel oder Kupfer oder einer Nickel- oder Kupferlegierung.
c. Der Polstift (108) besteht aus dem gleichen Material wie das Kontaktblech (113).

3. Zelle nach Anspruch 1 mit einem der folgenden zusätzlichen Merkmale:
a. Der Polstift (108) ist durch Verschweißung an das Kontaktblech (113) fixiert.
b. Der Polstift (108) weist ein endständiges Segment (108a) auf, das aus Nickel oder Kupfer oder einer Nickel- oder Kupferlegierung besteht oder das eine Hülle aus Nickel oder Kupfer oder einer Nickel- oder Kupferlegierung aufweist, insbesondere mit dem Nickel oder dem Kupfer oder der Nickel- oder Kupferlegierung beschichtet ist.
c. Das endständige Segment (108a) ist an das Kontaktblech (113) geschweißt.
d. Der Polstift (108) weist ein endständiges Segment (108b) auf, das aus Aluminium oder einer Aluminiumlegierung besteht oder das eine Hülle aus Aluminium oder einer Aluminiumlegierung aufweist, insbesondere mit dem Aluminium oder der Aluminiumlegierung beschichtet ist.
e. Das endständige Segment (108b) bildet einen von außerhalb des Gehäuses abgreifbaren Anschlusskontakt.

4. Zelle nach einem der Ansprüche 2 oder 3 mit mindestens einem der folgenden zusätzlichen Merkmale:
a. Der rohrförmige ausgebildete Polstift (108) umfasst an einem seiner Enden einen geschlossenen Boden (108c).
b. Der geschlossene Boden (108c) ist Teil des endständigen Segments (108a) und besteht aus dem Nickel oder dem Kupfer oder der Nickel- oder Kupferlegierung oder weist die Hülle aus dem Nickel oder dem Kupfer oder der Nickel- oder Kupferlegierung auf.
c. Der Boden (108c) ist an das Kontaktblech (113) geschweißt.

5. Zelle nach einem der Ansprüche 2 bis 4 mit einem der folgenden zusätzlichen Merkmale:
a. Das rohrförmig ausgebildete Gehäuseteil (101) umfasst in axialer Richtung einen Zentralabschnitt (130), in dem der Wickelmantel (104a) an seiner Innenseite (101b) anliegt, sowie einen Kontaktabschnitt (135), in dem der Rand (111a) der Metallscheibe (111) an seiner Innenseite (101b) anliegt.
b. Das rohrförmig ausgebildete Gehäuseteil (101) umfasst einen kreisförmigen Rand (101a), der radial nach innen über den Rand (110a) des Kontaktelements (110) umgebogen ist.

6. Zelle nach einem der vorhergehenden Ansprüche mit mindestens einem der folgenden zusätzlichen Merkmale:
a. Das rohrförmig ausgebildete Gehäuseteil (101) ist Bestandteil eines Gehäusebechers (107) aus Aluminium oder einer Aluminiumlegierung, der einen kreisförmigen Boden (107a) umfasst.
b. Der andere der ersten Längsränder (115a, 125a) liegt unmittelbar an dem Boden (107a) an und ist mit dem Boden (107a) bevorzugt durch Verschweißung verbunden.

7. Zelle nach einem der Ansprüche 1 bis 5 mit mindestens einem der folgenden zusätzlichen Merkmale:
a. Das rohrförmig ausgebildete Gehäuseteil (101) weist eine weitere endständige kreisförmige Öffnung auf.
b. Die Zelle (100) umfasst ein Verschlusselement (145) aus Aluminium oder einer Aluminiumlegierung mit einem kreisförmigen Rand (145a), das diese weitere endständige Öffnung verschließt und einen Boden des Gehäuses bildet.
c. Das Verschlusselement (145) für die weitere endständige Öffnung ist oder umfasst eine Metallscheibe aus Aluminium oder einer Aluminiumlegierung, deren Rand dem kreisförmigen Rand (145a) des metallischen Verschlusselements (145) entspricht oder diesen mitbildet.

8. Zelle nach Anspruch 7 mit mindestens einem der folgenden zusätzlichen Merkmale:
a. Die Metallscheibe ist derart in dem rohrförmig ausgebildeten Gehäuseteil angeordnet, dass ihr Rand entlang einer umlaufenden Kontaktzone an der Innenseite (101b) des rohrförmig ausgebildeten Gehäuseteils (101) anliegt.
b. Der Rand der Metallscheibe ist mit dem rohrförmig ausgebildeten Gehäuseteil (101) über eine umlaufende Schweißnaht verbunden.
c. Das rohrförmig ausgebildete Gehäuseteil (101) umfasst einen kreisförmigen Rand (101a), der radial nach innen über den Rand (145a) des Verschlusselements (145), insbesondere den Rand der Metallscheibe, umgebogen ist.

9. Zelle nach Anspruch 8 mit einem der folgenden zusätzlichen Merkmale:
a. Der andere der ersten Längsränder (115a, 125a) liegt unmittelbar an der Metallscheibe an und ist mit der Metallscheibe bevorzugt durch Verschweißung verbunden.
b. Der andere der ersten Längsränder ist an ein Kontaktblech (113) aus Aluminium oder einer Aluminiumlegierung geschweißt, das unmittelbar an der den Boden des Gehäuses bildenden Metallscheibe anliegt.

10. Verfahren zur Herstellung einer Energiespeicherzelle (100) nach einem der vorhergehenden Ansprüche umfassend die Schritte
a. Bereitstellung eines Elektroden-Separator-Verbunds (104) mit der Sequenz Anode / Separator / Kathode, der in Form eines zylindrischen Wickels mit zwei endständigen Stirnseiten (104b, 104c) und einem dazwischen liegenden Wickelmantel (104a) vorliegt, wobei die Elektroden jeweils einen mit einem Elektrodenmaterial beschichteten Stromkollektor (115, 125) mit einem ersten Längsrand (115a, 125a) und einem zweiten Längsrand und zwei Endstücken aufweisen und einer der Längsränder (115a, 125a) aus einer der endständigen Stirnseiten (104b, 104c) austritt,
b. Bereitstellung eines rohrförmig ausgebildeten Gehäuseteils (101) aus Aluminium oder einer Aluminiumlegierung, das eine Innenseite (101b) und eine endständige kreisförmige Öffnung (101c) aufweist,
c. Bereitstellung einer Metallscheibe (111) aus Aluminium oder einer Aluminiumlegierung, eines Kontaktblechs (113) aus Nickel oder Kupfer oder einer Nickel- oder Kupferlegierung, eines metallischen, rohrförmig ausgebildeten Polstifts (108) und eines Isoliermittels (103), wobei die Metallscheibe (111), der metallische Polstift (108) und das Isoliermittel (103) in Form einer vormontierten Deckelbaugruppe (122), bei der der rohrförmig ausgebildete Polstift (108) durch eine Durchbrechung in der Metallscheibe (111) geführt und durch das Isoliermittel (103) elektrisch gegen die Metallscheibe isoliert ist, bereitgestellt werden, und das Kontaktblech (113) separat bereitgestellt wird,
d. Verschweißen eines der Längsränder (115a, 125a) mit dem Kontaktblech (113),
e. Einschieben des Elektroden-Separator-Verbunds (104) mitsamt dem angeschweißten Kontaktblech (113) durch die kreisförmige Öffnung (101c) in das rohrförmig ausgebildete Gehäuseteil (101), so dass der Wickelmantel (104a) an der Innenseite (101b) des rohrförmig ausgebildeten Gehäuseteils (101) anliegt und
f. Anordnen der vormontierten Deckelbaugruppe (122) in dem rohrförmig ausgebildeten Gehäuseteil (101) derart, dass der Rand (111a) der Metallscheibe (111) entlang einer umlaufenden Kontaktzone an der Innenseite (101b) des rohrförmig ausgebildeten Gehäuseteils (101) anliegt und ein Ende des rohrförmig ausgebildeten Polstifts (108) in Kontakt mit dem Kontaktblech (113) steht, und
g. Fixieren des Randes (111a) der Metallscheibe (111) an der Innenseite (101b) des rohrförmig ausgebildeten Gehäuseteils (101) durch eine umlaufende Verschweißung, und
h. Anschweißen des rohrförmig ausgebildeten Polstifts (108) an das Kontaktblech (113).

11. Verfahren nach Anspruch 10, **gekennzeichnet durch** den folgenden zusätzlichen Schritt:
a. Der Öffnungsrand (101a) der endständigen kreisförmigen Öffnung (101c) wird radial nach innen über den Rand (111a) der Metallscheibe (111) umgebogen.

12. Verfahren nach einem der Ansprüche 10 oder 11, **gekennzeichnet durch** mindestens einen der folgenden zusätzlichen Schritte:
a. Der Elektroden-Separator-Verbund (104) wird mit einem Elektrolyten getränkt, wobei der Elektrolyt durch eine dafür vorgesehene Durchbrechung (114) in der Metallscheibe (111) oder einem anderen Gehäuseteil eingefüllt wird.
b. Nach dem Einfüllen des Elektrolyten wird die Durchbrechung (114) verschlossen, beispielsweise durch Verklebung oder Verschweißung oder Verlötung.
c. Der Verschluss erfolgt unter Verwendung einer Überdrucksicherung (120).

13. Verfahren nach einem der Ansprüche 10 bis 12, **gekennzeichnet durch** den folgenden Schritt:
a. Der rohrförmige ausgebildete Polstift (108) umfasst an einem seiner Enden einen geschlossenen Boden (108c), der an das Kontaktblech (113) geschweißt wird.

## Claims

1. Lithium-ion cell (100) having the features
a. the cell comprises an electrode-separator composite (104) with the sequence anode / separator / cathode,
b. the electrode-separator composite (104) is in the form of a cylindrical winding with two terminal end faces (104b, 104c) and an intermediate wound jacket (104a),
c. the cell comprises a housing, which comprises a metallic, tubular housing part (101) composed of aluminium or an aluminium alloy with a terminal circular opening (101c),
d. the electrode-separator composite (104) formed as a winding is axially oriented in the housing, so that the wound jacket (104a) bears against the inner face (101b) of the tubular housing part (101),
e. the anode is of strip-like form and comprises a strip-like anode current collector (115) composed of nickel or copper or a nickel or copper alloy with a first longitudinal edge (115a) and a second longitudinal edge and two end pieces,
f. the anode current collector (115) comprises a strip-like main region, which is laden with a layer of negative electrode material (155), and a free edge strip (117), which extends along the first longitudinal edge (115a) and which is not laden with the electrode material (155),
g. the cathode is of strip-like form and comprises a strip-like cathode current collector (125) composed of aluminium or an aluminium alloy with a first longitudinal edge (125a) and a second longitudinal edge and two end pieces,
h. the cathode current collector (125) comprises a strip-like main region, which is laden with a layer of positive electrode material (123), and a free edge strip (121), which extends along the first longitudinal edge (125a) and which is not laden with the electrode material (123),
i. the anode and the cathode are arranged within the electrode-separator composite (104) in such a way that the first longitudinal edge (115a) of the anode current collector (115) emerges from one of the terminal end faces (104b, 104c) and the first longitudinal edge (125a) of the cathode current collector (125) emerges from the other of the terminal end faces (104b, 104c),
j. the cell comprises a contact element (110), which closes the terminal circular opening (101c) of the tubular housing part (101) and which comprises a metal disc (111), a contact plate (113), a tubular metallic pole pin (108) and an insulating means (103),
k. the metal disc (111) consists of aluminium or an aluminium alloy, has a circular edge (111a) and is arranged in the tubular housing part (101) in such a way that the edge (111a) bears against the inner face (101b) of the tubular housing part (101) along a circumferential contact zone, wherein the edge (111a) of the metal disc (111) is connected to the tubular housing part (101) via a circumferential weld seam,
l. the contact plate (113) consists of nickel or copper or a nickel or copper alloy and has two faces, one of which faces in the direction of the metal disc (111) and the other of which is in direct contact with one of the first longitudinal edges (115a, 125a) and is connected to this longitudinal edge by welding,
m. the tubular pole pin (108) is fixed to the contact plate (113) and is led out of the housing of the cell through an aperture in the metal disc (111), and
n. the insulating means (103) electrically insulates the tubular pole pin (108) and the contact plate (113) against the metal disc (111).

2. Cell according to Claim 1, having at least one of the following additional features:
a. The pole pin (108) is fixed to the contact plate (113) by welding.
b. The pole pin (108) consists of nickel or copper or a nickel or copper alloy.
c. The pole pin (108) consists of the same material as the contact plate (113).

3. Cell according to Claim 1, having one of the following additional features:
a. The pole pin (108) is fixed to the contact plate (113) by welding.
b. The pole pin (108) has a terminal segment (108a), which consists of nickel or copper or a nickel or copper alloy or which has a casing composed of nickel or copper or a nickel or copper alloy, in particular is coated with the nickel or the copper or the nickel or copper alloy.
c. The terminal segment (108a) is welded to the contact plate (113).
d. The pole pin (108) has a terminal segment (108b), which consists of aluminium or an aluminium alloy or which has a casing composed of aluminium or an aluminium alloy, in particular is coated with the aluminium or the aluminium alloy.
e. The terminal segment (108b) forms a connection contact that can be tapped from outside the housing.

4. Cell according to either of Claims 2 and 3, having at least one of the following additional features:
a. The tubular pole pin (108) comprises a closed base (108c) at one of its ends.
b. The closed base (108c) is part of the terminal segment (108a) and consists of the nickel or the copper or the nickel or copper alloy or has the casing composed of the nickel or the copper or the nickel or copper alloy.
c. The base (108c) is welded to the contact plate (113).

5. Cell according to any of Claims 2 to 4, having one of the following additional features:
a. The tubular housing part (101) comprises, in the axial direction, a central portion (130), in which the wound jacket (104a) bears against its inner face (101b), and a contact portion (135), in which the edge (111a) of the metal disc (111) bears against its inner face (101b).
b. The tubular housing part (101) comprises a circular edge (101a), which is bent radially inwards over the edge (110a) of the contact element (110).

6. Cell according to one of the preceding claims, having at least one of the following additional features:
a. The tubular housing part (101) is a constituent part of a housing cup (107) composed of aluminium or an aluminium alloy, which comprises a circular base (107a).
b. The other of the first longitudinal edges (115a, 125a) bears directly against the base (107a) and is connected to the base (107a) preferably by welding.

7. Cell according to any of Claims 1 to 5, having at least one of the following additional features:
a. The tubular housing part (101) has a further terminal circular opening.
b. The cell (100) comprises a closure element (145) composed of aluminium or an aluminium alloy with a circular edge (145a), which closes this further terminal opening and forms a base of the housing.
c. The closure element (145) for the further terminal opening is or comprises a metal disc composed of aluminium or an aluminium alloy, the edge of which corresponds to or jointly forms the circular edge (145a) of the metallic closure element (145).

8. Cell according to Claim 7, having at least one of the following additional features:
a. The metal disc is arranged in the tubular housing part in such a way that its edge bears against the inner face (101b) of the tubular housing part (101) along a circumferential contact zone.
b. The edge of the metal disc is connected to the tubular housing part (101) via a circumferential weld seam.
c. The tubular housing part (101) comprises a circular edge (101a), which is bent radially inwards over the edge (145a) of the closure element (145), in particular the edge of the metal disc.

9. Cell according to Claim 8, having one of the following additional features:
a. The other of the first longitudinal edges (115a, 125a) bears directly against the metal disc and is connected to the metal disc preferably by welding.
b. The other of the first longitudinal edges is welded to a contact plate (113) composed of aluminium or an aluminium alloy, which bears directly against the metal disc that forms the base of the housing.

10. Method for producing an energy storage cell (100) according to any of the preceding claims, comprising the steps of
a. providing an electrode-separator composite (104) with the sequence anode / separator / cathode, which is in the form of a cylindrical winding with two terminal end faces (104b, 104c) and an intermediate wound jacket (104a), wherein the electrodes each have a current collector (115, 125), which is coated with an electrode material and has a first longitudinal edge (115a, 125a) and a second longitudinal edge and two end pieces, and one of the longitudinal edges (115a, 125a) emerges from one of the terminal end faces (104b, 104c),
b. providing a tubular housing part (101) composed of aluminium or an aluminium alloy, which has an inner face (101b) and a terminal circular opening (101c),
c. providing a metal disc (111) composed of aluminium or an aluminium alloy, a contact plate (113) composed of nickel or copper or a nickel or copper alloy, a metallic, tubular pole pin (108) and an insulating means (103), wherein the metal disc (111), the metallic pole pin (108) and the insulating means (103) are provided in the form of a pre-assembled cover assembly (122), in which the tubular pole pin (108) is guided through an aperture in the metal disc (111) and electrically insulated against the metal disc by the insulating means (103), and the contact plate (113) is provided separately,
d. welding one of the longitudinal edges (115a, 125a) to the contact plate (113),
e. inserting the electrode-separator composite (104) together with the welded-on contact plate (113) through the circular opening (101c) into the tubular housing part (101), so that the wound jacket (104a) bears against the inner face (101b) of the tubular housing part (101), and
f. arranging the pre-assembled cover assembly (122) in the tubular housing part (101) in such a way that the edge (111a) of the metal disc (111) bears against the inner face (101b) of the tubular housing part (101) along a circumferential contact zone and one end of the tubular pole pin (108) is in contact with the contact plate (113), and
g. fixing the edge (111a) of the metal disc (111) to the inner face (101b) of the tubular housing part (101) by circumferential welding, and
h. welding the tubular pole pin (108) to the contact plate (113).

11. Method according to Claim 10, **characterized by** the following additional step:
a. The opening edge (101a) of the terminal circular opening (101c) is bent radially inwards over the edge (111a) of the metal disc (111).

12. Method according to either of Claims 10 and 11, **characterized by** at least one of the following additional steps:
a. The electrode-separator composite (104) is impregnated with an electrolyte, wherein the electrolyte is filled through an aperture (114) provided for this purpose in the metal disc (111) or another housing part.
b. After filling the electrolyte, the aperture (114) is closed, for example by adhesive bonding or welding or soldering.
c. The closure is made using a pressure relief device (120).

13. Method according to any of Claims 10 to 12, **characterized by** the following step:
a. The tubular pole pin (108) comprises, at one of its ends, a closed base (108c), which is welded to the contact plate (113).

## Revendications

1. Cellule lithium-ion (100), présentant les particularités suivantes
a. la cellule comprend un ensemble électrodes-séparateur (104) avec la séquence anode / séparateur / cathode,
b. l'ensemble électrodes-séparateur (104) est présent sous la forme d'un enroulement cylindrique avec deux faces frontales terminales (104b, 104c) et une enveloppe d'enroulement intermédiaire (104a),
c. la cellule comprend un boîtier qui comprend une partie de boîtier métallique tubulaire (101) en aluminium ou en alliage d'aluminium pourvu d'une ouverture circulaire terminale (101c),
d. l'ensemble électrodes-séparateur (104) réalisé sous forme d'enroulement est aligné axialement dans le boîtier de sorte que l'enveloppe d'enroulement (104a) est adjacent à la face intérieure (101b) de la partie de boîtier tubulaire (101),
e. l'anode est réalisée sous forme de bande et comprend un collecteur de courant d'anode (115) en forme de bande, en nickel ou en cuivre ou en alliage de nickel ou de cuivre, pourvu d'un premier bord longitudinal (115a) et d'un deuxième bord longitudinal et de deux pièces d'extrémité,
f. le collecteur de courant d'anode (115) comprend une zone principale en forme de bande qui est chargée avec une couche d'un matériau d'électrode négative (155), ainsi qu'une marge libre (117) qui s'étend le long du premier bord longitudinal (115a) et qui n'est pas chargée avec le matériau d'électrode (155),
g. la cathode est réalisée sous forme de bande et comprend un collecteur de courant de cathode (125) en forme de bande, en aluminium ou en alliage d'aluminium, pourvu d'un premier bord longitudinal (125a) et d'un deuxième bord longitudinal et de deux pièces d'extrémité,
h. le collecteur de courant de cathode (125) comprend une zone principale en forme de bande qui est chargée avec une couche d'un matériau d'électrode positive (123), ainsi qu'une marge libre (121) qui s'étend le long du premier bord longitudinal (125a) et qui n'est pas chargée avec le matériau d'électrode (123),
i. l'anode et la cathode sont disposées à l'intérieur de l'ensemble électrodes-séparateur (104) de telle sorte que le premier bord longitudinal (115a) du collecteur de courant d'anode (115) sort d'une des faces frontales terminales (104b, 104c), et le premier bord longitudinal (125a) du collecteur de courant de cathode (125) sort de l'autre des faces frontales terminales (104b, 104c),
j. la cellule comprend un élément de contact (110) qui ferme l'ouverture circulaire terminale (101c) de la partie de boîtier tubulaire (101) et qui comprend un disque métallique (111), une tôle de contact (113), une broche polaire métallique tubulaire (108) et un isolant (103),
k. le disque métallique (111) est composé d'aluminium ou d'un alliage d'aluminium, présente un bord circulaire (111a) et est disposé dans la partie de boîtier (101) tubulaire de telle sorte que le bord (111a) est adjacent, le long d'une zone de contact périphérique, à la face intérieure (101b) de la partie de boîtier tubulaire (101), dans lequel le bord (111a) du disque métallique (111) est relié à la partie de boîtier tubulaire (101) par l'intermédiaire d'un joint de soudure,
l. la tôle de contact (113) est composée de nickel ou de cuivre ou d'un alliage de nickel ou de cuivre et présente deux faces dont l'une est tournée en direction du disque métallique (111) et l'autre est en contact direct avec l'un des premiers bords longitudinaux (115a, 125a) et est relié à ce bord longitudinal par soudage,
m. la broche polaire tubulaire (108) est fixée à la tôle de contact (113) et est guidée à travers un passage dans le disque métallique (111) hors du boîtier de la cellule, et
n. l'isolant (103) isole la broche polaire tubulaire (108) et la tôle de contact (113) électriquement par rapport au disque métallique (111).

2. Cellule selon la revendication 1, présentant au moins l'une des particularités supplémentaires suivantes :
a. la broche polaire (108) est fixée à la tôle de contact (113) par soudage,
b. la broche polaire (108) est composée de nickel ou de cuivre ou d'un alliage de nickel ou de cuivre,
c. la broche polaire (108) est composée du même matériau que la tôle de contact (113).

3. Cellule selon la revendication 1, présentant l'une des particularités supplémentaires suivantes :
a. la broche polaire (108) est fixée à la tôle de contact (113) par soudage,
b. la broche polaire (108) présente un segment terminal (108a) qui est composé de nickel ou de cuivre ou d'un alliage de nickel ou de cuivre ou qui présente une gaine de nickel ou de cuivre ou d'un alliage de nickel ou de cuivre, étant en particulier recouverte du nickel ou du cuivre ou de l'alliage de nickel ou de cuivre,
c. le segment terminal (108a) est soudé à la tôle de contact (113),
d. la broche polaire (108) présente un segment terminal (108b) qui est composé d'aluminium ou d'un alliage d'aluminium ou qui présente une gaine d'aluminium ou d'un alliage d'aluminium, étant en particulier recouverte de l'aluminium ou de l'alliage d'aluminium,
e. le segment terminal (108b) constitue un contact de connexion accessible depuis l'extérieur du boîtier.

4. Cellule selon l'une quelconque des revendications 2 ou 3, présentant au moins l'une des particularités supplémentaires suivantes :
a. la broche polaire tubulaire (108) comprend un fond (108c) fermé à l'une de ses extrémités,
b. le fond fermé (108c) fait partie du segment terminal (108a) et est composé du nickel ou du cuivre ou de l'alliage de nickel ou de cuivre et présente une gaine en nickel ou en cuivre ou en alliage de nickel ou de cuivre,
c. le fond (108c) est soudé à la tôle de contact (113).

5. Cellule selon l'une quelconque des revendications 2 à 4, présentant l'une des particularités supplémentaires suivantes :
a. la partie de boîtier tubulaire (101) comprend dans la direction axiale une section centrale (130) dans laquelle l'enveloppe d'enroulement (104a) est adjacente à sa face intérieure (101b), ainsi qu'une section de contact (135) dans laquelle le bord (111a) du disque métallique (111) est adjacent à sa face intérieure (101b),
b. la partie de boîtier tubulaire (101) comprend un bord circulaire (101a) qui est replié radialement vers l'intérieur par-dessus le bord (110a) de l'élément de contact (110).

6. Cellule selon l'une quelconque des revendications précédentes, présentant au moins l'une des particularités supplémentaires suivantes :
a. la partie de boîtier tubulaire (101) fait partie d'un godet de boîtier (107) en aluminium ou en alliage d'aluminium qui comprend un fond circulaire (107a),
b. l'autre des premiers bords longitudinaux (115a, 125a) est directement adjacent au fond (107a) et est relié au fond (107a) de préférence par soudage.

7. Cellule selon l'une quelconque des revendications 1 à 5, présentant au moins l'une des particularités supplémentaires suivantes :
a. la partie de boîtier tubulaire (101) présente une ouverture circulaire terminale supplémentaire,
b. la cellule (100) comprend un élément de fermeture (145) en aluminium ou en alliage d'aluminium avec un bord circulaire (145a) qui ferme ladite ouverture terminale supplémentaire et constitue un fond du boîtier,
c. l'élément de fermeture (145) est ou comprend pour l'ouverture terminale supplémentaire un disque métallique en aluminium ou en alliage d'aluminium dont le bord correspond au bord circulaire (145a) de l'élément de fermeture métallique (145) ou constitue celui-ci conjointement.

8. Cellule selon la revendication 7, présentant au moins l'une des particularités supplémentaires suivantes :
a. le disque métallique est disposé dans la partie de boîtier tubulaire de telle sorte que son bord est adjacent le long d'une zone de contact périphérique à la face intérieure (101b) de la partie de boîtier tubulaire (101),
b. le bord du disque métallique est relié à la partie de boîtier tubulaire (101) par l'intermédiaire d'un joint de soudure périphérique,
c. la partie de boîtier tubulaire (101) comprend un bord circulaire (101a) qui est replié radialement vers l'intérieur par-dessus le bord (145a) de l'élément de fermeture (145), en particulier le bord du disque métallique.

9. Cellule selon la revendication 8, présentant l'une des particularités supplémentaires suivantes :
a. l'autre des premiers bords longitudinaux (115a, 125a) est directement adjacent au disque métallique et est relié au disque métallique de préférence par soudage,
b. l'autre des premiers bords longitudinaux est soudé à une tôle de contact (113) en aluminium ou en alliage d'aluminium qui est directement adjacente au disque métallique constituant le fond du boîtier.

10. Procédé permettant de fabriquer une cellule d'accumulation d'énergie (100) selon l'une quelconque des revendications précédentes, comprenant les étapes consistant à
a. fournir un ensemble électrodes-séparateur (104) avec la séquence anode / séparateur / cathode, qui est présent sous la forme d'un enroulement cylindrique avec deux faces frontales terminales (104b, 104c) et une enveloppe d'enroulement intermédiaire (104a), dans lequel les électrodes présentent respectivement un collecteur de courant (115, 125) recouvert d'un matériau d'électrode ayant un premier bord longitudinal (115a, 125a) et un deuxième bord longitudinal et deux pièces d'extrémité, et l'un des bords longitudinaux (115a, 125a) sort d'une des faces frontales terminales (104b, 104c),
b. fournir une partie de boîtier tubulaire (101) en aluminium ou en alliage d'aluminium qui présente une face intérieure (101b) et une ouverture circulaire terminale (101c),
c. fournir un disque métallique (111) en aluminium ou en alliage d'aluminium, une tôle de contact (113) en nickel ou en cuivre ou en alliage de nickel ou de cuivre, une broche polaire tubulaire métallique (108) et un isolant (103), dans lequel le disque métallique (111), la broche polaire métallique (108) et l'isolant (103) sont fournis sous la forme d'un sous-ensemble de couvercle (122) prémonté, dans lequel la broche polaire tubulaire (108) est guidée à travers un passage dans le disque métallique (111) et est isolée électriquement par rapport au disque métallique par l'isolant (103), et la tôle de contact (113) est fournie séparément,
d. souder l'un des bords longitudinaux (115a, 125a) à la tôle de contact (113),
e. insérer l'ensemble électrodes-séparateur (104) conjointement avec la tôle de contact soudée (113) à travers l'ouverture circulaire (101c) dans la partie de boîtier tubulaire (101) de sorte que l'enveloppe d'enroulement (104a) est adjacente à la face intérieure (101b) de la partie de boîtier tubulaire (101), et
f. disposer le sous-ensemble de couvercle (122) prémonté dans la partie de boîtier tubulaire (101) de telle sorte que le bord (111a) du disque métallique (111) est adjacent à la face intérieure (101b) de la partie de boîtier tubulaire (101) et une extrémité de la broche polaire tubulaire (108) est en contact avec la tôle de contact (113), et
g. fixer le bord (111a) du disque métallique (111) à la face intérieure (101b) de la partie de boîtier tubulaire (101) par un soudage périphérique, et
h. souder la broche polaire tubulaire (108) à la tôle de contact (113).

11. Procédé selon la revendication 10, **caractérisé par** l'étape supplémentaire suivante :
a. le bord d'ouverture (101a) de l'ouverture circulaire terminale (101c) est replié radialement vers l'intérieur par-dessus le bord (111a) du disque métallique (111).

12. Procédé selon l'une quelconque des revendications 10 ou 11, **caractérisé par** au moins l'une des étapes supplémentaires suivantes :
a. l'ensemble électrodes-séparateur (104) est imprégné avec un électrolyte, l'électrolyte étant versé à travers un passage (114) dans le disque métallique (111) prévu à cet effet ou dans une autre partie de boîtier,
b. après le versement de l'électrolyte, le passage (114) est fermé, par exemple par collage ou soudage ou brasage,
c. la fermeture est effectuée en utilisant un dispositif de protection contre la surpression (120).

13. Procédé selon l'une quelconque des revendications 10 à 12, **caractérisé par** l'étape suivante :
a. la broche polaire tubulaire (108) comprend un fond (108c) fermé à l'une de ses extrémités et qui est soudé à la tôle de contact (113).
